(19) **Europäisches Patentamt / European Patent Office / Office européen des brevets**

(11) **EP 4 625 837 A1**

(12) **EUROPEAN PATENT APPLICATION**
published in accordance with Art. 153(4) EPC

(43) Date of publication:
01.10.2025 Bulletin 2025/40

(21) Application number: 23910831.9

(22) Date of filing: 28.12.2023

(51) International Patent Classification (IPC):
*H04B 7/06* (2006.01)

(52) Cooperative Patent Classification (CPC):
H04B 7/06; H04L 27/26

(86) International application number:
PCT/CN2023/142772

(87) International publication number:
WO 2024/140915 (04.07.2024 Gazette 2024/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.12.2022 CN 202211699755

(71) Applicant: Huawei Technologies Co., Ltd.
Shenzhen, Guangdong 518129 (CN)

(72) Inventors:
• LIU, Yongjun
Shenzhen, Guangdong 518129 (CN)
• HUANG, Qirui
Shenzhen, Guangdong 518129 (CN)

(74) Representative: MERH-IP Matias Erny Reichl
Hoffmann
Patentanwälte PartG mbB
Paul-Heyse-Straße 29
80336 München (DE)

(54) **SIGNAL TRANSMISSION METHOD AND APPARATUS**

(57) Embodiments of this application provide a signal transmission method and an apparatus, to reduce a peak-to-average ratio of a sent space-time wave packet signal. The method is applied to a transmitter including a plurality of transmitting units, and one transmitting unit corresponds to a plurality of subcarriers. The method includes: obtaining an information source bit sequence, and generating at least one symbol based on the information source bit sequence; modulating each subcarrier of a target transmitting unit based on the at least one symbol, to obtain a modulated signal corresponding to each subcarrier, where the target transmitting unit is included in the plurality of transmitting units, a phase of the modulated signal is determined based on a first phase and a second phase, the first phase is obtained based on a distance between the target transmitting unit and a reference position and a frequency of the subcarrier, the second phase is obtained based on the symbol, and different subcarriers correspond to different second phases; and sending a space-time wave packet signal via the target transmitting unit, where the space-time wave packet signal includes modulated signals corresponding to the plurality of subcarriers of the target transmitting unit.

A transmitter obtains an information source bit sequence, and generates at least one symbol based on the information source bit sequence — S301

The transmitter modulates each subcarrier of a target transmitting unit based on the at least one symbol, to obtain a modulated signal corresponding to each subcarrier — S302

The transmitter sends a space-time wave packet signal via the target transmitting unit — S303

FIG. 3

## Description

This application claims priority to Chinese Patent Application No. 202211699755.6, filed with the China National Intellectual Property Administration on December 28, 2022 and entitled "SIGNAL TRANSMISSION METHOD AND APPARATUS", which is incorporated herein by reference in its entirety.

## TECHNICAL FIELD

This application relates to the field of communication technologies, and in particular, to a signal transmission method and an apparatus.

## BACKGROUND

During propagation of an electromagnetic wave in free space, a wave vector of the electromagnetic wave usually has a transverse component. As a result, a beam of the electromagnetic wave diffuses as a propagation distance increases, and diffraction occurs. In a wireless communication scenario with a long propagation distance, diffraction of an electromagnetic wave greatly reduces a signal-to-noise ratio or energy transmission efficiency.

To improve the signal-to-noise ratio or the energy transmission efficiency and make the electromagnetic wave exhibit non-diffracting characteristic, a concept of a space-time wave packet signal is introduced. The space-time wave packet signal may be used to correlate a time characteristic with a spatial characteristic of the electromagnetic wave, and specifically, correlate a frequency with a spatial position and a phase of the electromagnetic wave.

However, a current application scope of the space-time wave packet signal is limited. For example, the space-time wave packet signal is applicable to a light wave band. When a space-time wave packet signal is generated in a microwave frequency band or a millimeter-wave frequency band, because the space-time wave packet signal is a wideband signal, a transmit end needs to superimpose modulated signals of a plurality of subcarriers, and a peak amplitude of a superimposed space-time wave packet signal is usually large, and a peak-to-average ratio is high.

## SUMMARY

Embodiments of this application provide a signal transmission method and an apparatus, to reduce a peak-to-average ratio of a sent space-time wave packet signal.

To achieve the foregoing objectives, the following technical solutions are used in embodiments of this application.

According to a first aspect, a signal transmission method is provided. An apparatus for performing the signal transmission method may be a transmitter including a plurality of transmitting units. One transmitting unit corresponds to a plurality of subcarriers, or may be a module used in the transmitter, for example, a chip or a chip system. The following is described with an example in which the method is performed by the transmitter. The transmitter obtains an information source bit sequence, and generates at least one symbol based on the information source bit sequence. The transmitter modulates each subcarrier of a target transmitting unit based on the at least one symbol, to obtain a modulated signal corresponding to each subcarrier. The target transmitting unit is included in the plurality of transmitting units, and a phase of the modulated signal is determined based on a first phase and a second phase. The first phase is obtained based on a distance between the target transmitting unit and a reference position and a frequency of the subcarrier. A first phase of a modulated signal corresponding to any subcarrier at the reference position is zero. Frequency spacings between a plurality of subcarriers of the target transmitting unit are the same or different. The second phase is obtained based on the symbol, and different subcarriers correspond to different second phases. The transmitter sends a space-time wave packet signal via the target transmitting unit, where the space-time wave packet signal includes modulated signals corresponding to the plurality of subcarriers of the target transmitting unit.

According to the signal transmission method provided in this embodiment of this application, because different subcarriers correspond to different initial second phases, when a plurality of modulated signals that correspond to a plurality of subcarriers and that are sent by each transmitting unit are superimposed, a probability of simultaneous occurrence of peaks or large values is greatly reduced, to effectively reduce a peak-to-average ratio. In addition, for a specific subcarrier, for example, a first subcarrier, a second phase corresponding to the first subcarrier is fixed. Therefore, for first subcarriers of different transmitting units, for example, a first subcarrier of a first transmitting unit and a first subcarrier of a second transmitting unit, a phase difference is only a difference between a first phase corresponding to the first subcarrier of the first transmitting unit and a first phase corresponding to the first subcarrier of the second transmitting unit. The first phase satisfies a spatiotemporal coupling relationship, that is, the first phase is related to a frequency of a subcarrier and a spatial position of a transmitting unit. Therefore, the difference between the first phase corresponding to the first subcarrier of the first transmitting unit and the first phase corresponding to the first subcarrier of the second transmitting unit is related to a frequency of the first subcarrier, a spatial position of the first transmitting unit, and a spatial position of the second transmitting unit, and is also fixed. In other words, for specific subcarriers of different transmitting units, relative phases still satisfy the spatiotemporal coupling relationship. Therefore, the signal transmission method provided in this embodiment of this application does not damage a non-diffracting characteristic of the space-time wave packet signal.

With reference to the first aspect, in a possible implementation, the second phase is in a linear relationship with an index of the subcarrier, or the second phase is included in a preset distribution range and a size of the preset distribution range is not an integer multiple of $2\pi$. This solution provides two examples of selecting the second phase.

With reference to the first aspect, in a possible implementation, that the second phase is obtained based on the symbol includes: The second phase is obtained based on the index of the subcarrier, a slope corresponding to the symbol, and a constant, where different symbols correspond to different slopes; or that the second phase is obtained based on the symbol includes: The second phase is included in the preset distribution range, where different symbols correspond to different preset ranges. This solution provides two examples of determining the second phase based on the symbol, allowing the modulated signals corresponding to the plurality of subcarriers to carry symbol information.

With reference to the first aspect, in a possible implementation, the modulated signal is an orthogonal frequency division multiplexing OFDM signal. In this solution, the signal transmission method provided in this embodiment of this application may be used in combination with an OFDM technology, to help improve spectral efficiency and signal processing efficiency, and enhance flexibility of spectrum application.

According to a second aspect, a signal transmission method is provided. An apparatus for performing the signal transmission method may be a receiver including a plurality of receiving units, or may be a module used in the receiver, for example, a chip or a chip system. The following is described with an example in which the method is performed by the receiver for description. The receiver receives a space-time wave packet signal from a transmitter via the plurality of receiving units. The receiver determines, based on strength of a space-time wave packet signal received by each receiving unit and a position of each receiving unit, a radius of the space-time wave packet signal. The receiver determines, based on the radius of the space-time wave packet signal, the symbol corresponding to the space-time wave packet signal.

According to the signal transmission method provided in this embodiment of this application, the steps of determining the symbol are provided, to parse symbol information carried in the received space-time wave packet signal.

With reference to the second aspect, in a possible implementation, that the receiver determines, based on the radius of the space-time wave packet signal, the symbol corresponding to the space-time wave packet signal includes: The receiver obtains a relationship between an index of a reference symbol and a radius of a reference space-time wave packet signal corresponding to the reference symbol, where the index of the reference symbol is used to identify the reference symbol; and the receiver determines, based on the radius of the space-time wave packet signal and the relationship, an index of the symbol corresponding to the space-time wave packet signal, and obtains the symbol based on the index of the symbol. In this solution, there may be a known reference symbol used to assist the receiver in determining the symbol corresponding to the space-time wave packet signal.

With reference to the second aspect, in a possible implementation, there is at least one reference symbol; and when there is one reference symbol, the relationship between the index of the reference symbol and the radius of the reference space-time wave packet signal corresponding to the reference symbol is a ratio of the index of the reference symbol to the radius of the reference space-time wave packet signal; or when there are a plurality of reference symbols, the relationship between the index of the reference symbol and the radius of the reference space-time wave packet signal corresponding to the reference symbol is a ratio of a first difference to a second difference, where the first difference is a difference between indexes of different reference symbols, and the second difference is a difference between radiuses of different reference space-time wave packet signals. This solution provides the relationship between the index of the reference symbol and the radius of the reference space-time wave packet signal present when there is one reference symbol or when there are a plurality of reference symbols.

With reference to the second aspect, in a possible implementation, before the receiver determines, based on the strength of a space-time wave packet signal received by each receiving unit and the position of each receiving unit, the radius of the space-time wave packet signal, the method further includes: The receiver receives, from the transmitter via the plurality of receiving units, a reference space-time wave packet signal corresponding to a reference symbol; and the receiver determines the radius of the reference space-time wave packet signal based on strength of the reference space-time wave packet signal received by each receiving unit and a distance between each receiving unit and a centroid corresponding to the reference symbol.

With reference to the second aspect, in a possible implementation, the position of the receiving unit is the distance between the receiving unit and the centroid corresponding to the reference symbol, where when there is one reference symbol, the centroid corresponding to the reference symbol is a receiving centroid of the reference space-time wave packet signal corresponding to the reference symbol; or when there are a plurality of reference symbols, the centroid corresponding to the reference symbol is an average centroid of receiving centroids of a plurality of reference space-time wave packet signals corresponding to the plurality of reference symbols. This solution provides a definition of the centroid corresponding to the reference symbol when there is one reference symbol or when there are a plurality of reference symbols, to further determine the distance between each receiving unit and the centroid corresponding to the reference symbol.

With reference to the second aspect, in a possible implementation, that the receiver determines, based on the radius of the space-time wave packet signal, the symbol corresponding to the space-time wave packet signal includes: The receiver determines, based on the radius of the space-time wave packet signal and a minimum value of a difference between radiuses of space-time wave packet signals corresponding to different symbols, an index of the symbol corresponding to the space-time wave packet signal, and obtains the symbol based on the index of the symbol. In this solution, the method in which the receiver determines the symbol corresponding to the space-time wave packet signal when no reference symbol exists is provided.

According to a third aspect, a signal transmission method is provided. An apparatus for performing the signal transmission method may be a receiver, or may be a module used in the receiver, for example, a chip or a chip system. The following is described with an example in which the method is performed by the receiver for description. The receiver receives a space-time wave packet signal from a transmitter, where the space-time wave packet signal includes modulated signals corresponding to a plurality of subcarriers of a target transmitting unit of the transmitter. The receiver demodulates the space-time wave packet signal to obtain a plurality of demodulated signals. The receiver determines a first phase difference based on phases of the plurality of demodulated signals, where the first phase difference represents a phase relationship between two demodulated signals. The receiver determines, based on a correspondence between a phase difference and an index of a symbol, an index of a first symbol corresponding to the first phase difference, and obtains, based on the index of the first symbol, the first symbol corresponding to the space-time wave packet signal.

According to the signal transmission method provided in this embodiment of this application, the steps of determining the symbol based on the plurality of demodulated signals are provided, to parse symbol information carried in the received space-time wave packet signal.

With reference to the third aspect, in a possible implementation, the first phase difference is a difference between phases of two adjacent demodulated signals in the plurality of demodulated signals, or the first phase difference is an average value of differences between phases of a plurality of two adjacent demodulated signals in the plurality of demodulated signals. In this solution, the receiver uses the average value of the differences between the phases of the plurality of two adjacent demodulated signals as the first phase difference, to improve accuracy of the first phase difference, and further improve accuracy of determining the symbol.

According to a fourth aspect, a transmitter is provided to implement the foregoing methods. The transmitter includes a corresponding module, unit, or means (means) for performing the foregoing methods. The module, unit, or means may be implemented by hardware, software, or hardware executing corresponding software. The hardware or the software includes one or more modules or units corresponding to the foregoing functions.

With reference to the fourth aspect, in a possible implementation, the transmitter includes: an obtaining module, a symbol generation module, a modulation module, and a plurality of transmitting units, where one transmitting unit corresponds to a plurality of subcarriers, and a target transmitting unit is included in the plurality of transmitting units. The obtaining module is configured to obtain an information source bit sequence. The symbol generation module is configured to generate at least one symbol based on the information source bit sequence. The modulation module is configured to modulate each subcarrier of the target transmitting unit based on the at least one symbol, to obtain a modulated signal corresponding to each subcarrier, where a phase of the modulated signal is determined based on a first phase and a second phase, the first phase is obtained based on a distance between the target transmitting unit and a reference position and a frequency of the subcarrier, a first phase of a modulated signal corresponding to any subcarrier at the reference position is zero, frequency spacings between a plurality of subcarriers of the target transmitting unit are the same or different, the second phase is obtained based on the symbol, and different subcarriers correspond to different second phases. The target transmitting unit is configured to send a space-time wave packet signal, where the space-time wave packet signal includes modulated signals corresponding to the plurality of subcarriers of the target transmitting unit.

With reference to the fourth aspect, in a possible implementation, the second phase is in a linear relationship with an index of the subcarrier, or the second phase is included in a preset distribution range and a size of the preset distribution range is not an integer multiple of $2\pi$.

With reference to the fourth aspect, in a possible implementation, that the second phase is obtained based on the symbol includes: The second phase is obtained based on the index of the subcarrier, a slope corresponding to the symbol, and a constant, where different symbols correspond to different slopes; or that the second phase is obtained based on the symbol includes: The second phase is included in the preset distribution range, where different symbols correspond to different preset ranges.

With reference to the fourth aspect, in a possible implementation, the modulated signal is an orthogonal frequency division multiplexing OFDM signal.

For technical effects brought by any one of the possible implementations of the fourth aspect, refer to the technical effects brought by the first aspect or different implementations of the first aspect. Details are not described herein again.

According to a fifth aspect, a receiver is provided to implement the foregoing methods. The receiver includes a corresponding module, unit, or means (means) for performing the foregoing methods. The module, unit, or means may be implemented by hardware, software, or hardware executing corresponding software. The hardware or the software includes one or more modules or units corresponding to the foregoing functions.

With reference to the fifth aspect, in a possible implementation, the receiver includes a determining module and a plurality of receiving units. The plurality of receiving units are configured to receive a space-time wave packet signal from a transmitter. The determining unit is configured to determine, based on strength of a space-time wave packet signal received by each receiving unit and a position of each receiving unit, a radius of the space-time wave packet signal. The determining unit is further configured to determine, based on the radius of the space-time wave packet signal, a symbol corresponding to the space-time wave packet signal.

With reference to the fifth aspect, in a possible implementation, the receiver further includes: an obtaining module; and that the determining unit is further configured to determine, based on the radius of the space-time wave packet signal, the symbol corresponding to the space-time wave packet signal includes: The determining unit is configured to: obtain, by using the obtaining module, a relationship between an index of a reference symbol and a radius of a reference space-time wave packet signal corresponding to the reference symbol, where the index of the reference symbol is used to identify the reference symbol; and determine, based on the radius of the space-time wave packet signal and the relationship, an index of the symbol corresponding to the space-time wave packet signal, and obtain the symbol based on the index of the symbol.

With reference to the fifth aspect, in a possible implementation, there is at least one reference symbol; and when there is one reference symbol, the relationship between the index of the reference symbol and the radius of the reference space-time wave packet signal corresponding to the reference symbol is a ratio of the index of the reference symbol to the radius of the reference space-time wave packet signal; or when there are a plurality of reference symbols, the relationship between the index of the reference symbol and the radius of the reference space-time wave packet signal corresponding to the reference symbol is a ratio of a first difference to a second difference, where the first difference is a difference between indexes of different reference symbols, and the second difference is a difference between radiuses of different reference space-time wave packet signals.

With reference to the fifth aspect, in a possible implementation, the plurality of receiving units are further configured to receive, from the transmitter, a reference space-time wave packet signal corresponding to a reference symbol; and the determining module is further configured to determine the radius of the reference space-time wave packet signal based on strength of the reference space-time wave packet signal received by each receiving unit and a distance between each receiving unit and a centroid corresponding to the reference symbol.

With reference to the fifth aspect, in a possible implementation, the position of the receiving unit is the distance between the receiving unit and the centroid corresponding to the reference symbol, where when there is one reference symbol, the centroid corresponding to the reference symbol is a receiving centroid of the reference space-time wave packet signal corresponding to the reference symbol; or when there are a plurality of reference symbols, the centroid corresponding to the reference symbol is an average centroid of receiving centroids of a plurality of reference space-time wave packet signals corresponding to the plurality of reference symbols.

With reference to the fifth aspect, in a possible implementation, that the determining unit is further configured to determine, based on the radius of the space-time wave packet signal, the symbol corresponding to the space-time wave packet signal includes: The determining unit is configured to: determine, based on the radius of the space-time wave packet signal and a minimum value of a difference between radiuses of space-time wave packet signals corresponding to different symbols, an index of the symbol corresponding to the space-time wave packet signal, and obtain the symbol based on the index of the symbol.

For technical effects brought by any one of the possible implementations of the fifth aspect, refer to the technical effects brought by the second aspect or different implementations of the second aspect. Details are not described herein again.

According to a sixth aspect, a receiver is provided to implement the foregoing methods. The receiver includes a corresponding module, unit, or means (means) for performing the foregoing methods. The module, unit, or means may be implemented by hardware, software, or hardware executing corresponding software. The hardware or the software includes one or more modules or units corresponding to the foregoing functions.

With reference to the sixth aspect, in a possible implementation, the receiver includes a receiving module, a demodulation module, and a determining module. The receiving module is configured to receive a space-time wave packet signal from a transmitter, where the space-time wave packet signal includes modulated signals corresponding to a plurality of subcarriers of a target transmitting unit of the transmitter. The demodulation module is configured to demodulate the space-time wave packet signal to obtain a plurality of demodulated signals. The determining module is configured to determine a first phase difference based on phases of the plurality of demodulated signals, where the first phase difference represents a phase relationship between two demodulated signals. The determining module is further configured to: determine, based on a correspondence between a phase difference and an index of a symbol, an index of a first symbol corresponding to the first phase difference, and obtain, based on the index of the first symbol, the first symbol corresponding to the space-time wave packet signal.

With reference to the sixth aspect, in a possible implementation, the first phase difference is a difference between phases of two adjacent demodulated signals in the plurality of demodulated signals, or the first phase difference is an average value of differences between phases of a plurality of two adjacent demodulated signals in the plurality of demodulated signals.

For technical effects brought by any one of the possible implementations of the sixth aspect, refer to the technical effects brought by the third aspect or different implementations of the third aspect. Details are not described herein again.

According to a seventh aspect, a communication apparatus is provided, including a processor. The processor is configured to: after coupling to a memory and reading instructions stored in the memory, perform the method according to the first aspect, the second aspect, or the third aspect based on the instructions.

With reference to the seventh aspect, in a possible implementation, the communication apparatus further includes the memory. The memory is configured to store the computer instructions.

With reference to the seventh aspect, in a possible implementation, the communication apparatus further includes a communication interface. The communication interface is used by the communication apparatus to communicate with another device. For example, the communication interface may be a transceiver, an input/output interface, an interface circuit, an output circuit, an input circuit, a pin, a related circuit, or the like.

With reference to the seventh aspect, in a possible implementation, the communication apparatus may be a chip or a chip system. When the communication apparatus is the chip system, the communication apparatus may include a chip, or may include a chip and another discrete device.

According to an eighth aspect, a computer-readable storage medium is provided. The computer-readable storage medium stores instructions. When the instructions are run on a computer, the computer is enabled to perform the method according to the first aspect, the second aspect, or the third aspect.

According to a ninth aspect, a communication system is provided. The communication system includes a transmitter configured to perform the method according to the first aspect and a receiver configured to perform the method according to the second aspect; or includes a transmitter configured to perform the method according to the first aspect and a receiver configured to perform the method according to the third aspect.

According to a tenth aspect, a computer program product including instructions is provided. When the computer program product runs on a computer, the computer is enabled to perform the method according to the first aspect, the second aspect, or the third aspect.

For technical effects brought by any one of the possible implementations of the seventh aspect to the tenth aspect, refer to the technical effects brought by different implementations of the first aspect, the second aspect, or the third aspect. Details are not described herein again.

## BRIEF DESCRIPTION OF DRAWINGS

FIG. 1 is a diagram of an architecture of a communication system according to an embodiment of this application;

FIG. 2 is a diagram of a structure of a communication apparatus according to an embodiment of this application;

FIG. 3 is a flowchart 1 of a signal transmission method according to an embodiment of this application;

FIG. 4 is a diagram of a set of points that satisfy a spatiotemporal coupling characteristic according to an embodiment of this application;

FIG. 5A is a simulation diagram of a waveform of a beam signal that carries no symbol information according to an embodiment of this application;

FIG. 5B is a simulation diagram of a waveform of a space-time wave packet signal present when $\psi$ is 0.0273 radian according to an embodiment of this application;

FIG. 5C is a simulation diagram of a waveform of a space-time wave packet signal present when $\psi$ is 0.0683 radian according to an embodiment of this application;

FIG. 6A is a diagram of a relationship between signal strength and a propagation distance of a beam signal that carries no symbol information according to an embodiment of this application;

FIG. 6B is a diagram of a relationship between signal strength and a propagation distance of a space-time wave packet signal present when $\psi$ is 0.0273 radian according to an embodiment of this application;

FIG. 7A is a simulation diagram of a waveform of a space-time wave packet signal present when $\gamma$ is $\pi$ according to an embodiment of this application;

FIG. 7B is a simulation diagram of a waveform of a space-time wave packet signal present when $\gamma$ is $3\pi$ according to an embodiment of this application;

FIG. 7C is a simulation diagram of a waveform of a space-time wave packet signal present when $\gamma$ is $5\pi$ according to an

EP 4 625 837 A1

embodiment of this application;
FIG. 8 is a diagram of a relationship between signal strength and a propagation distance of a space-time wave packet signal present when $\gamma$ is $\pi$ according to an embodiment of this application;
FIG. 9 is a flowchart 2 of a signal transmission method according to an embodiment of this application;
FIG. 10 is a flowchart 3 of a signal transmission method according to an embodiment of this application;
FIG. 11 is a diagram of a structure of a transmitter according to an embodiment of this application;
FIG. 12 is a diagram 1 of a structure of a receiver according to an embodiment of this application; and
FIG. 13 is a diagram 2 of a structure of a receiver according to an embodiment of this application.

**DESCRIPTION OF EMBODIMENTS**

For ease of understanding the technical solutions in embodiments of this application, the following first briefly describes technologies or terms related to this application.

1. Diffraction of an electromagnetic wave

The electromagnetic wave is energy that propagates in a wave form. In physics, electromagnetic waves appear as alternating electric and magnetic fields. In mathematics, an electromagnetic wave is commonly described using a sine function, and has attributes including amplitude, frequency, wavelength, and phase. When the electromagnetic wave is described using the sine function, the electromagnetic wave may also be referred to as a harmonic.
The diffraction of the electromagnetic wave usually means a physical phenomenon in which the electromagnetic wave deviates from an original propagation direction when encountering an obstacle and continues to propagate. During propagation of the electromagnetic wave in free space, a wave vector of the electromagnetic wave usually has a transverse component. As a result, a beam of the electromagnetic wave diffuses as a propagation distance increases, and diffraction occurs. In other words, the diffraction of the electromagnetic wave is essentially divergence of a beam signal during propagation. In a wireless communication or wireless charging scenario with a long propagation distance, the diffraction of the electromagnetic wave is more obvious, that is, the beam signal experiences more severe divergence. As a result, a signal-to-noise ratio or energy transmission efficiency of the beam signal is greatly reduced.
The diffraction of the electromagnetic wave allows the electromagnetic wave to bypass the obstacle and continue to propagate. A diffraction capability of the electromagnetic wave is usually related to a frequency of the electromagnetic wave. Generally, a higher frequency of the electromagnetic wave indicates a weaker diffraction capability.

2. Beamforming

Beamforming is a directional radiation technology, and can implement energy-concentrated radiation. Beamforming is also one of main methods for implementing a highly directional beam. A principle of beamforming is wave interference, specifically constructive and destructive interference of a wave. In the beamforming technology, a size of a transmitting unit usually needs to be a wavelength or 1/2 of the wavelength, and there is a very high requirement on a phase. In other words, tolerance for a phase mismatch is low, and once the phase mismatch occurs, performance degrades significantly.
Generally, a larger quantity of transmitting units included in an antenna indicates a narrower beam emitted by using the antenna. In the beamforming technology, amplitudes, phases, or phase weights of signals transmitted by different transmitting units may be adjusted, so that propagation paths of the signals transmitted by the different transmitting units are different, and a main lobe direction of a beam may be controlled. Technologies such as a phased array, a large aperture antenna, and a metasurface can implement beamforming and generate an electromagnetic wave with a highly directional transmission characteristic.
The phased array means an antenna array including a plurality of transmitting units that are arranged in an array form, and a radiation energy relationship and a phase relationship between the transmitting units in the phased array may be controlled. The large aperture antenna may be, for example, a large-diameter horn antenna or a reflector antenna. The metasurface means an array including a plurality of electromagnetic wave control units with fine structures. The metasurface is configured to reflect or transmit an electromagnetic wave from a transmit antenna, and the transmit antenna exists independently of the metasurface. The electromagnetic wave control unit is configured to control parameters of a reflected or transmitted electromagnetic wave, including an amplitude, a phase, and polarization. A size of the electromagnetic wave control unit is usually less than 1/2 of the wavelength.
The "transmitting unit" in embodiments of this application may also be referred to as an "antenna element" or a "radiation element".
Although beamforming can generate a highly directional beam, there is a diffraction limit, that is, there is a minimum divergence angle. The minimum divergence angle $\alpha$ satisfies the following formula: $\alpha = 1.22\lambda / D$, where the

minimum divergence angle is a full angle, measured in radians, $\lambda$ represents a wavelength of an electromagnetic wave, and D represents an antenna aperture. For example, when $\lambda$ = 5.2 centimeters (cm), or a frequency of the electromagnetic wave is 5.8 gigahertz (GHz), and *D=30 cm,* the minimum divergence angle is 0.21 radian, namely, 12 degrees. After the electromagnetic wave is transmitted for 10 meters (m), a main lobe diffuses to a diameter of greater than 4 m. As a result, a signal-to-noise ratio or efficiency is still low in a transmission scenario with a long distance.

3. Non-diffracting beam

The non-diffracting beam may be converted from a conventional electromagnetic wave. Specifically, a phase of the electromagnetic wave is modulated, to generate the non-diffracting beam. The non-diffracting beam has a non-divergent characteristic, and has a focusing capability that exceeds a diffraction limit, that is, the non-diffracting beam may break a limit of a minimum divergence angle. For example, the non-diffracting beam may be a Bessel beam, that is, a beam whose amplitude spatial distribution satisfies a first kind Bessel function.

However, an effective distance of the non-diffracting beam is usually limited to a near field range, and the effective distance is about within $2D^2 / \lambda$, where $\lambda$ represents a wavelength of an electromagnetic wave, and *D* represents an antenna aperture. For example, when $\lambda$ = 5.2 *cm* or a frequency of the electromagnetic wave is 5.8 GHz, and *D=30 cm,* the effective distance is approximately within 3.5 m. After a transmission distance of the non-diffracting beam exceeds the effective distance, the non-diffracting beam is degraded to a Gaussian beam, and further follows a general diffraction or diffusion rule. In a wireless communication or wireless charging scenario, to increase an effective distance of a non-diffracting beam, a large antenna aperture or a large effective area of an antenna is usually required, or if the effective distance of the non-diffracting beam is excessively short, it is difficult to apply the non-diffracting beam.

4. Space-time wave packet signal

A common wave is usually formed by superimposing a plurality of harmonics, or even an infinite quantity of harmonics. A superimposed wave is usually non-local, but may alternatively be local, and a waveform of the superimposed wave seems to be wrapped by a particular surface. This local wave may be referred to as a "wave packet" or a space-time wave packet signal.

As described in the Background, the space-time wave packet signal exhibits a non-diffracting characteristic or a non-divergent characteristic, that is, the space-time wave packet signal can exceed a diffraction limit and break a limit of a minimum divergence angle. However, when a space-time wave packet signal is generated in a microwave frequency band or a millimeter-wave frequency band, a plurality of subcarrier signals need to be superimposed to obtain the space-time wave packet signal. As a result, a peak-to-average ratio of the space-time wave packet signal is likely to be high. When the peak-to-average ratio of the space-time wave packet signal is high, a power amplifier at a transmit end can output only at low average power for a long time, to take into account peak power and allow the power amplifier to work in a linear region to avoid signal distortion. As a result, performance of the power amplifier cannot be fully utilized, and it is not conducive to implementing a long signal transmission distance.

Although there are many methods for reducing a peak-to-average ratio of a multicarrier signal, these methods cannot be directly applied to the space-time wave packet signal, because a frequency of each subcarrier of the space-time wave packet signal has a specific coupling relationship with a spatial position and a phase of each subcarrier, and current methods damage a spatiotemporal coupling relationship of the space-time wave packet signal, and makes a non-diffracting characteristic invalid. In addition, the spatiotemporal coupling relationship of the space-time wave packet signal may be damaged and the non-diffracting characteristic may be invalid when symbol modulation is performed on the space-time wave packet signal.

The following describes the technical solutions in embodiments of this application with reference to the accompanying drawings in embodiments of this application. In the descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

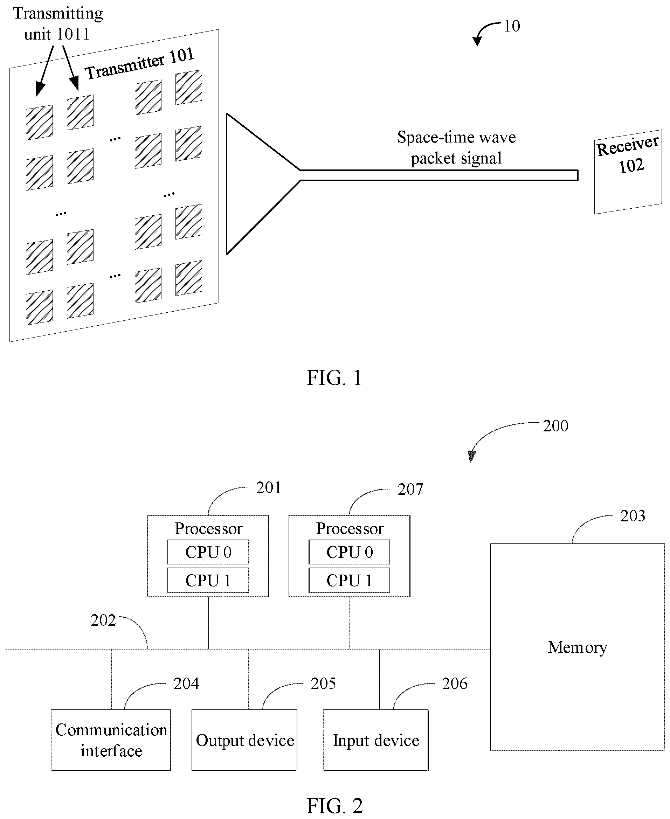

FIG. 1 is a communication system 10 according to an embodiment of this application. The communication system 10 may be applied to a wireless communication or wireless charging scenario. The communication system 10 may include a transmitter 101 and a receiver 102. The transmitter 101 may include a plurality of transmitting units 1011, and the transmitter 101 may send a space-time wave packet signal to the receiver 102. For example, the transmitter 101 may be a base station, and the receiver 102 may be a terminal device served by the base station. Alternatively, the transmitter 101 may be a wireless fidelity (wireless fidelity, Wi-Fi) router, and the receiver 102 may be a terminal device that accesses the Wi-Fi router. Alternatively, the transmitter 101 may be a smartphone, and the receiver 102 may be an access network device or another terminal device. Alternatively, the transmitter 101 and the receiver 102 may be a same device, for example, a vehicle-mounted millimeter-wave radar or a vehicle-mounted lidar. Specific forms of the transmitter 101 and the receiver 102 are not limited in embodiments of this application.

In the communication system 10, one transmitting unit 1011 corresponds to a plurality of subcarriers. The transmitter 101 is configured to: obtain an information source bit sequence, and generate at least one symbol based on the information source bit sequence. The transmitter 101 is further configured to modulate each subcarrier of a target transmitting unit 1011 based on the at least one symbol, to obtain a modulated signal corresponding to each subcarrier. The target transmitting unit 1011 is included in at least one transmitting unit 1011, a phase of the modulated signal is determined based on a first phase and a second phase. The first phase is obtained based on a distance between the target transmitting unit 1011 and a reference position and a frequency of the subcarrier. A first phase of a modulated signal corresponding to any subcarrier at the reference position is zero. Frequency spacings between a plurality of subcarriers of the target transmitting unit 1011 are the same or different. The second phase is obtained based on the symbol, and different subcarriers correspond to different second phases. The transmitter 101 is further configured to send a space-time wave packet signal via the target transmitting unit 1011, where the space-time wave packet signal includes modulated signals corresponding to the plurality of subcarriers of the target transmitting unit 1011. Specific implementation and technical effect of the solution are described in detail in subsequent method embodiments, and details are not described herein again.

In a possible implementation, the receiver 102 includes a plurality of receiving units 1021 (not shown in FIG. 1). The receiver 102 is configured to receive a space-time wave packet signal from the transmitter 101 via at least one receiving unit 1021. The receiver 102 is further configured to determine, based on strength of a space-time wave packet signal received by each receiving unit 1021 and a position of each receiving unit 1021, a radius of the space-time wave packet signal. The receiver 102 is further configured to determine, based on the radius of the space-time wave packet signal, the symbol corresponding to the space-time wave packet signal. Specific implementation and technical effect of the solution are described in detail in subsequent method embodiments, and details are not described herein again.

In another possible implementation, the receiver 102 is configured to receive a space-time wave packet signal from the transmitter 101, where the space-time wave packet signal includes modulated signals corresponding to a plurality of subcarriers of the target transmitting unit 1011 of the transmitter 101; the receiver 102 is further configured to demodulate the space-time wave packet signal to obtain a plurality of demodulated signals; the receiver 102 is further configured to obtain a first phase difference based on phases of the plurality of demodulated signals, where the first phase difference represents a phase relationship between two demodulated signals; the receiver 102 is further configured to: determine, based on a correspondence between a phase difference and an index of a symbol, an index of a first symbol corresponding to the first phase difference, and obtain, based on the index of the first symbol, the first symbol corresponding to the space-time wave packet signal. Specific implementation and technical effect of the solution are described in detail in subsequent method embodiments, and details are not described herein again.

Optionally, a related function of the transmitter or the receiver in embodiments of this application may be implemented by one device, or may be jointly implemented by a plurality of devices, or may be implemented by one or more functional modules in one device. This is not specifically limited in embodiments of this application. It may be understood that the foregoing functions may be network elements in a hardware device, software functions running on dedicated hardware, a combination of hardware and software, or virtualization functions instantiated on a platform (for example, a cloud platform).

For example, the related function of the transmitter or the receiver in embodiments of this application may be implemented by a communication apparatus 200 in FIG. 2.

FIG. 2 is a diagram of a structure of the communication apparatus 200 according to an embodiment of this application. The communication apparatus 200 includes one or more processors 201, a communication line 202, and at least one communication interface (in FIG. 2, an example in which a communication interface 204 and one processor 201 are included is merely used for description). Optionally, the communication apparatus 200 may further include a memory 203.

The processor 201 may be a CPU, a microprocessor, an application-specific integrated circuit (application-specific integrated circuit, ASIC), or one or more integrated circuits for controlling solution program execution in this application.

The communication line 202 may include a path, used to connect different components.

The communication interface 204 may be a transceiver module, configured to communicate with another device or a communication network, for example, an Ethernet, a RAN, or a WLAN. For example, the transceiver module may be an apparatus like a transceiver or a transceiver. Optionally, the communication interface 204 may alternatively be a transceiver circuit located in the processor 201, and is configured to implement signal input and signal output of the processor.

The memory 203 may be an apparatus having a storage function. For example, the memory 203 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer. However, this is not limited thereto. The memory may exist independently, and is connected to the processor through the communication line 202. The memory may alternatively be integrated with the processor.

The memory 203 is configured to store computer-executable instructions for executing the solutions in this application, and the processor 201 controls the execution. The processor 201 is configured to execute the computer-executable instructions stored in the memory 203, to implement signal transmission methods provided in embodiments of this application.

Alternatively, in embodiments of this application, the processor 201 may implement a processing-related function in the signal transmission methods provided in the following embodiments of this application, and the communication interface 204 is responsible for communicating with the another device or the communication network. This is not specifically limited in embodiments of this application.

The computer-executable instructions in embodiments of this application may also be referred to as application code. This is not specifically limited in embodiments of this application.

During specific implementation, in an embodiment, the processor 201 may include one or more CPUs, for example, a CPU 0 and a CPU 1 in FIG. 2.

In a specific implementation, in an embodiment, the communication apparatus 200 may include a plurality of processors such as the processor 201 and a processor 207 in FIG. 2. Each of the processors may be a single-core (single-CPU) processor, or may be a multi-core (multi-CPU) processor. The processor herein may be one or more devices, circuits, and/or processing cores configured to process data (for example, computer program instructions).

In a specific implementation, in an embodiment, the communication apparatus 200 may further include an output device 205 and an input device 206. The output device 205 communicates with the processor 201, and may display information in a plurality of manners.

The communication apparatus 200 may be a general-purpose apparatus or a dedicated apparatus. For example, the communication apparatus 200 may be a desktop computer, a portable computer, a network server, a palmtop computer (personal digital assistant, PDA), a mobile phone, a tablet computer, a wireless terminal apparatus, a vehicle-mounted terminal apparatus, an embedded device, or a device having a structure similar to that in FIG. 2. A type of the communication apparatus 200 is not limited in embodiments of this application.

The following specifically describes signal transmission methods provided in embodiments of this application with reference to FIG. 1 and FIG. 2.

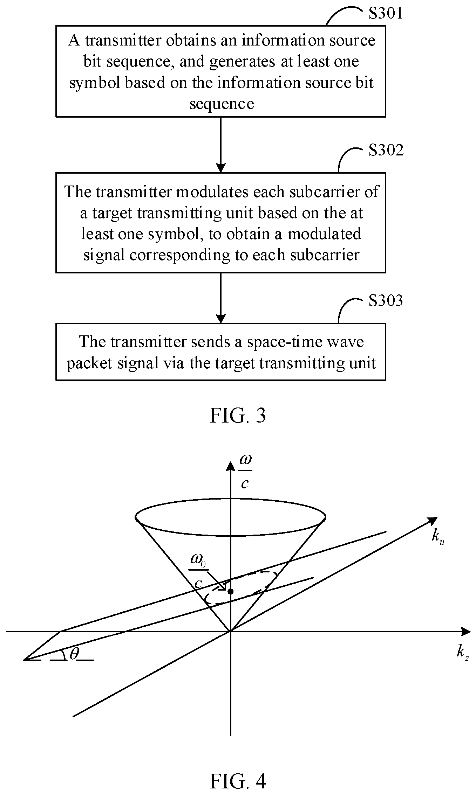

FIG. 3 is a signal transmission method according to an embodiment of this application. The signal transmission method is applied to a transmitter including a plurality of transmitting units, and one transmitting unit corresponds to a plurality of subcarriers. The signal transmission method includes the following steps:

Step S301: A transmitter obtains an information source bit sequence, and generates at least one symbol based on the information source bit sequence.

In this embodiment of this application, the information source bit sequence may be a sequence including a bit "0" and a bit "1". One symbol may be generated by one or more bits in the information source bit sequence. One symbol may be represented by a binary, decimal, or hexadecimal number, and there are one or more bits. A positional number system representation manner and a quantity of bits of the symbol are not limited in this embodiment of this application. For example, if the symbol is a two-bit binary number, "00" in the information source bit sequence may be expressed as a symbol "00"; "01" in the information source bit sequence may be expressed as a symbol "01"; "10" in the information source bit sequence may be expressed as a symbol "10"; and "11" in the information source bit sequence may be expressed as a symbol "11". For another example, if the symbol is a one-bit hexadecimal number, "0000" in the information source bit sequence may be expressed as a symbol "0", "0001" in the information source bit sequence may be expressed as a symbol "1", and by analogy, "1111" in the information source bit sequence may be expressed as a symbol "F".

Step S302: The transmitter modulates each subcarrier of a target transmitting unit based on the at least one symbol, to obtain a modulated signal corresponding to each subcarrier. The target transmitting unit is included in the plurality of transmitting units, a phase of the modulated signal is determined based on a first phase and a second phase, the first phase is obtained based on a distance between the target transmitting unit and a reference position and a frequency of the subcarrier, a first phase of a modulated signal corresponding to any subcarrier at the reference position is zero, frequency spacings between a plurality of subcarriers of the target transmitting unit are the same or different, the second phase is obtained based on the symbol, and different subcarriers correspond to different second phases.

Before a process in which the transmitter modulates a carrier signal of a subcarrier based on a symbol is described, a beam modulation process is first described below. A modulated beam satisfies a spatiotemporal coupling relationship, and does not carry any symbol information.

As described above, only a phase of an electromagnetic wave is modulated, and a non-diffracting beam including a Bessel beam may be generated. As a result, an effective distance of the non-diffracting beam is very short, and it is difficult to break a limit of a near-field range. The beam provided in this embodiment of this application is formed by modulating a time characteristic and a spatial characteristic of the electromagnetic wave, and can break the limit of the near-field range, to implement a long non-diffracting distance.

Characteristics of the electromagnetic wave may be described independently from each other in time and spatial dimensions. The time characteristic may be referred to as a frequency, namely, a quantity of times that the electromagnetic wave oscillates per second. A value of the frequency is f, and a value of an angular frequency $\omega$ corresponding to the frequency is $2\pi f$. The spatial characteristic may be referred to as a wave vector. Specifically, the spatial characteristic may include a phase and a spatial position. The wave vector is a vector, a direction of the wave vector is a direction of electromagnetic wave propagation, and a magnitude of the wave vector is a wave number, namely, a quantity of cycles included in each meter during electromagnetic wave propagation. In space, the wave vector includes three-dimensional components. It is assumed that a z direction is a direction of electromagnetic wave transmission, and an x direction, a y direction, and the z direction are perpendicular to each other. Because diffraction or diffusion occurs in the electromagnetic wave during propagation, the electromagnetic wave also propagates in the x direction and/or the y direction, that is, the wave vector also has a component in the x direction and/or the y direction. If the wave numbers in the x direction, the y direction, and the z direction are $k_x$, $k_y$, and $k_z$ respectively, Formula (1) is satisfied:

$$k_x^2 + k_y^2 + k_z^2 = \frac{\omega^2}{c^2} \qquad\qquad \text{Formula (1)}$$

c is a propagation speed of light in a vacuum. Assuming that $k_u$ is a transverse wave number perpendicular to the z direction of electromagnetic wave transmission, that is, $k_u^2 = k_x^2 + k_y^2$, Formula (1) may be rewritten as Formula (2):

$$k_u^2 + k_z^2 = \frac{\omega^2}{c^2} \qquad\qquad \text{Formula (2)}$$

In a three-dimensional coordinate system including a $k_u$ axis, a $k_z$ axis, and a $\frac{\omega}{c}$ axis, all points that satisfy Formula (2) are located on a cone shown in FIG. 4. Therefore, Formula (1) may also be referred to as a light cone equation.

Then, a spatiotemporal coupling characteristic is introduced, to satisfy Formula (3):

$$\frac{\omega}{c} = k_z \tan\theta + \frac{\omega_0}{c} \qquad\qquad \text{Formula (3)}$$

All points that satisfy Formula (3) are located on a plane shown in FIG. 4. An included angle between the plane and a horizontal plane is $\theta$, and an intersection point between the plane and the $\frac{\omega}{c}$ axis is (0, 0, $\frac{\omega_0}{c}$). Therefore, Formula (3) may also be referred to as a tangent plane equation. Points that satisfy both Formula (1) and Formula (3), namely, intersection points between the cone and the plane in FIG. 4, may form a set of spatiotemporal coupling.

The following proves that the points satisfying both Formula (1) and Formula (3) exhibit a non-diffracting characteristic.

An electric field $E(x,y,z,t)$ of the electromagnetic wave at any point and at any moment satisfies Formula (4):

$$E(x,y,z,t) = \int\int\int \tilde{E}(k_x,k_y,\omega)e^{ik_x x}e^{ik_y y}e^{ik_z z}e^{-i\omega t}dk_x dk_y d\omega \qquad \text{Formula (4)}$$

$\tilde{E}(k_x,k_y,\omega)$ is a spectrum distribution function.

$\tilde{E}(k_x,k_y,\omega)$ is controlled to satisfy Formula (5):

$$\tilde{E}(k_x,k_y,\omega) = \tilde{E}(k_x,k_y)\delta[\omega - \omega(k_x,k_y)] \qquad \text{Formula (5)}$$

Formula (5) is substituted into Formula (4), and it can be derived that $E(x,y,z,t)$ satisfies Formula (6):

$$E(x,y,z,t) = \int\int \tilde{E}(k_x,k_y)e^{ik_x x}e^{ik_y y}e^{ik_z z}e^{-i\omega t}dk_x dk_y \qquad \text{Formula (6)}$$

Assuming that $b = -\dfrac{\omega_0}{c*\tan\theta}$ , $v_g = c*\tan\theta$, and a physical meaning represented by $v_g$ is a group velocity of the electromagnetic wave, Formula (3) may be transformed into: $k_z = b + \dfrac{\omega}{v_g}$ . $k_z = b + \dfrac{\omega}{v_g}$ is substituted into Formula (6), and it can be derived that $E(x,y,z,t)$ satisfies Formula (7):

$$E(x,y,z,t) = \int\int \tilde{E}(k_x,k_y)e^{ik_x x}e^{ik_y y}e^{iz\left(b+\frac{\omega}{v_g}\right)}e^{-i\omega t}dk_x dk_y = \int\int \tilde{E}(k_x,k_y)e^{ik_x x}e^{ik_y y}e^{-i\omega\left(t-\frac{z}{v_g}\right)}e^{ibz}dk_x dk_y$$
$$= e^{ibz}\int\int \tilde{E}(k_x,k_y)e^{ik_x x}e^{ik_y y}e^{-i\omega\left(t-\frac{z}{v_g}\right)}dk_x dk_y \qquad \text{Formula (7)}$$

When $z = 0$, Formula (6) may be transformed into Formula (8):

$$E(x,y,0,t) = \int\int \tilde{E}(k_x,k_y)e^{ik_x x}e^{ik_y y}e^{-i\omega t}dk_x dk_y \qquad \text{Formula (8)}$$

According to Formula (7) and Formula (8), it can be derived that $E(x, y, z, t)$ satisfies Formula (9):

$$E(x,y,z,t) = e^{ibz}*E\left(x,y,0,t-\frac{z}{v_g}\right) \qquad \text{Formula (9)}$$

Further, according to Formula (9), it can be derived that $E(x,y,z,t)$ satisfies Formula (10):

$$\left|E(x,y,z,t)\right| = \left|E\left(x,y,0,t-\frac{z}{v_g}\right)\right| \qquad \text{Formula (10)}$$

It can be learned from Formula (10) that an envelope of the electric field present when $z$ is any value is the same as an envelope of the electric field present when $z$ is zero. In other words, the electromagnetic wave with the introduced spatiotemporal coupling characteristic exhibits envelope invariance or the non-diffracting characteristic.

The foregoing proves that the points satisfying both Formula (1) and Formula (3) exhibit the non-diffracting characteristic. The following describes introduction of the first phase.

According to Formula (1), Formula (3), and $k_u^2 = k_x^2 + k_y^2$ , it may be derived that the transverse wave number $k_u$ satisfies Formula (11):

$$k_u = \frac{2\pi}{c}\sqrt{f^2 - \frac{(f-f_0)^2}{\tan^2\theta}}$$
Formula (11)

The non-diffracting characteristic can be implemented, provided that the transverse wave number $k_u$ satisfies Formula (11). A reference position may be selected, and a phase of the reference position is 0. Assuming that a phase of a position that is d away from the reference position is $\varphi_u$, $\varphi_u$ satisfies Formula (12):

$$\varphi_u = k_u d = \frac{2\pi d}{c}\sqrt{f^2 - \frac{(f-f_0)^2}{\tan^2\theta}}$$
Formula (12)

It can be learned from Formula (12) that $\varphi_u$ is a function of a distance and a frequency. If phase modulation is performed on each subcarrier of the transmitting unit according to Formula (12), the frequency and the wave vector may be related, that is, spatiotemporal coupling may be implemented. Due to an infinite quantity of spatial positions and frequencies, only a limited quantity of frequencies and a limited quantity of spatial positions can be controlled during implementation. In a transmitter including at least one transmitting unit, application of Formula (12) is as follows:

In this embodiment of this application, assuming that the target transmitting unit includes a $p^{th}$ transmitting unit of the transmitter, the $p^{th}$ transmitting unit corresponds to M subcarriers, a frequency corresponding to any subcarrier of the $p^{th}$ transmitting unit is $f_i$, and $i$ is an index of the subcarrier, where M is a positive integer greater than or equal to 2, $1 \leq i \leq M$, and $i$ and p are both positive integers, the transmitter may perform phase modulation on an $i^{th}$ subcarrier of the $p^{th}$ transmitting unit according to Formula (13):

$$\varphi_{ip} = \frac{2\pi d_p}{c}\sqrt{f_i^2 - \frac{(f_i-f_0)^2}{\tan^2\theta}}$$
Formula (13)

For example, the first phase in this embodiment of this application may be $\varphi_{ip}$ obtained according to Formula (13). $d_p$ represents a distance between the $p^{th}$ transmitting unit and the reference position. The reference position has the following feature: A first phase of a modulated signal corresponding to any subcarrier at the reference position is zero, the reference position may be a central position of the at least one transmitting unit, or the reference position may be a preset position. This is not limited in this embodiment of this application. A value of $\theta$ may be obtained based on a bandwidth B. For example, a relationship between $\theta$ and B satisfies: $B = 2f_c\tan\theta$, where $f_c$ represents a center frequency. In other words, $\theta$ satisfies: $\theta = \arctan(0.5B/f_c)$. In this case, $f_0$ satisfies: $f_0 = f_c(1-\tan^2\theta)$. A frequency range of the M subcarriers is $[f_c(1-\tan\theta), f_c(1+\tan\theta)]$. In the frequency range, one frequency is selected at a spacing of $\Delta f$ as a frequency corresponding to one subcarrier. In other words, frequency spacings between the M subcarriers are the same. Alternatively, a frequency is selected at an unequal spacing in the frequency range as a frequency corresponding to a subcarrier. This is not limited in this embodiment of this application.

On the basis of obtaining, by using Formula (13), the phase $\varphi_{ip}$ that satisfies the spatiotemporal coupling characteristic, the following describes a specific beam modulation process.

Under the same assumptions as the assumptions used in deriving Formula (13), a digital modulated signal corresponding to an $i^{th}$ subcarrier of the $p^{th}$ transmitting unit may be expressed as Formula (14):

$$A * e^{j\left[2\pi(f_i-f_c)t+\varphi_{ip}\right]}$$
Formula (14)

$\varphi_{ip}$ may be obtained by using Formula (13). Digital modulated signals on the $p^{th}$ transmitting unit are equivalent to superimposition of digital modulated signals corresponding to the M subcarriers, that is, the digital modulated signals on the $p^{th}$ transmitting unit may be expressed as Formula (15):

$$\sum_{i=1}^{M} A * e^{j\left[2\pi(f_i-f_c)t+\varphi_{ip}\right]}$$
Formula (15)

Usually, N time points may be selected as sampling points, for example, t=0, T, 2T, ..., (N-1)T, and the time points may be substituted into Formula (15), to obtain discrete values. The discrete values can be converted into an analog signal through digital-to-analog conversion. Frequency mixing is performed on the analog signal and a carrier signal $e^{jf_ct}$, to

obtain a beam signal that is suitable for wireless transmission and that does not carry any symbol information. The beam signal may be expressed as Formula (16):

$$\sum_{i=1}^{M} A * e^{j\left(2\pi f_i t + \varphi_{ip}\right)}$$

Formula (16)

A frequency of a beam that does not carry any symbol information is not limited to a microwave band, a millimeter wave band, or a terahertz band, and may be further located in a light wave frequency band including infrared, visible, and ultraviolet light. Correspondingly, the transmitter may be implemented in a plurality of manners, for example, may be a phased array, or may include a plurality of metasurfaces. For a light wave signal, there is also a corresponding optical phased array or a corresponding metasurface. The transmitter may include a plurality of transmitting units at different spatial positions, and a phase of a signal transmitted by each transmitting unit may be controlled.

On the basis of the beam modulation process, the following describes a process in which the transmitter modulates the carrier signal of the subcarrier based on the symbol.

The "second phase" in this embodiment of this application may also be referred to as an initial phase. In this embodiment of this application, two possible implementations for selecting the second phase are provided.

In a possible implementation, the second phase is in a linear relationship with an index of the subcarrier. In other words, the second phase $\beta_i$ satisfies Formula (17):

$$\beta_i = i * \psi + \psi_0$$

Formula (17)

Both $\psi_0$ and a slope $\psi$ are constants. With reference to Formula (16), a space-time wave packet signal sent by the $p^{th}$ transmitting unit in this embodiment of this application may be expressed as Formula (18):

$$\sum_{i=1}^{M} A * e^{j\left(2\pi f_i t + \varphi_{ip} + \beta_i\right)}$$

Formula (18)

Optionally, that the second phase is obtained based on the symbol includes: The second phase is obtained based on the index of the subcarrier, a slope corresponding to the symbol, and a constant, where different symbols correspond to different slopes. With reference to Formula (17), different symbols correspond to different slopes $\psi$, and the different slopes $\psi$ cause different ranges of the second phase. The range of the second phase is a difference between a maximum value and a minimum value of the second phase. The range of the second phase may be specifically a product of a difference between a maximum value and a minimum value of the index of the subcarrier and the slope $\psi$.

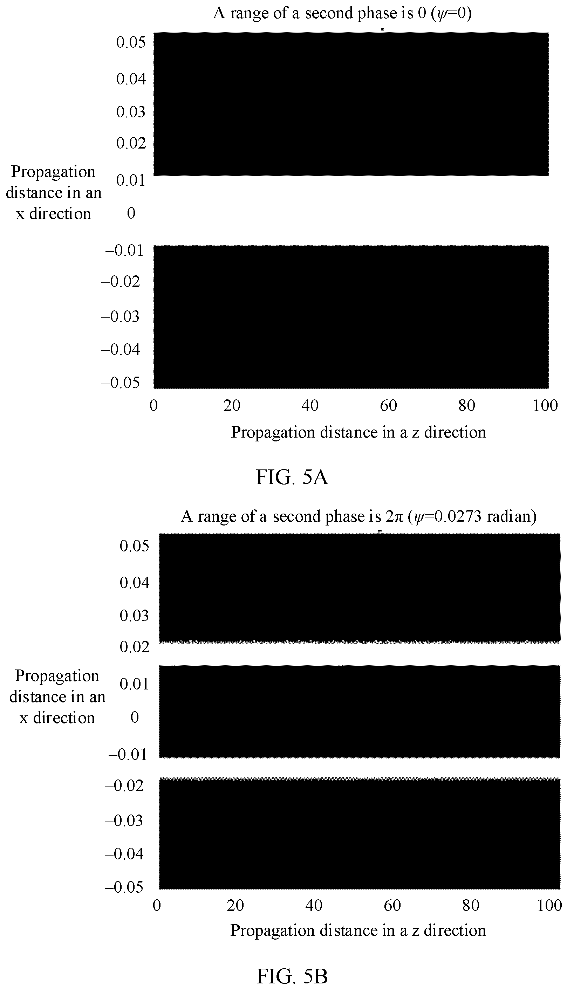

230 subcarriers are used as an example. FIG. 5A is a simulation diagram of a waveform of a beam signal that carries no symbol information. A modulated beam signal includes only the first phase, and does not include the second phase. In other words, if $\psi$ is 0, the range of the second phase is also 0. A horizontal coordinate represents a signal transmission distance in a z direction, namely, a direction of beam signal transmission, measured in meters. A vertical coordinate represents a signal transmission distance in an x direction that is perpendicular to the z direction, measured in meters. It can be learned from FIG. 5A that, as the beam signal propagates forward in the z direction, the beam signal does not diffuse in the x direction, that is, the beam signal exhibits a non-diffracting characteristic.

For example, 230 subcarriers are used as an example. FIG. 5B is a simulation diagram of a waveform of a space-time wave packet signal present when $\psi$ is 0.0273 radian. When $\psi$ is 0.0273 radian, a corresponding range of the second phase is $2\pi$. In comparison with FIG. 5A, in FIG. 5B, the waveform is split from one main lobe into two main lobes. However, each main lobe propagates forward in the z direction with the signal, and does not diffuse in the x direction. In other words, each main lobe still exhibits the non-diffracting characteristic.

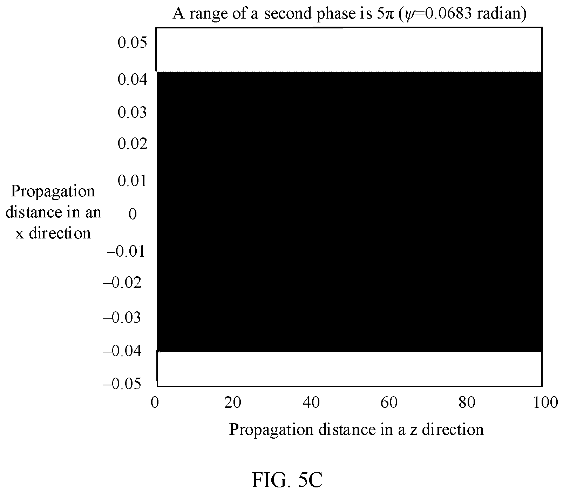

For example, 230 subcarriers are used as an example. FIG. 5C is a simulation diagram of a waveform of a space-time wave packet signal present when $\psi$ is 0.0683 radian. When $\psi$ is 0.0683 radian, a corresponding range of the second phase is $5\pi$. Compared with FIG. 5B, a distance between two main lobes in the waveform shown in FIG. 5C increases with in a phase range or a value of $\psi$, and each main lobe still exhibits the non-diffracting characteristic.

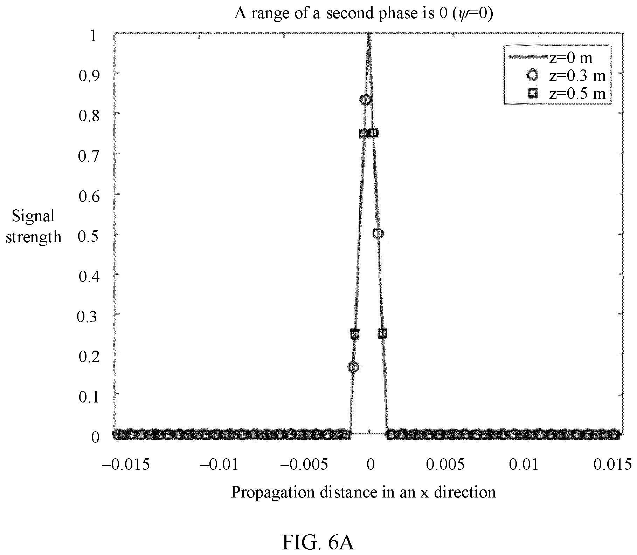

With reference to FIG. 5A, FIG. 6A is a diagram of a relationship between signal strength and a propagation distance of a beam signal that carries no symbol information. A horizontal coordinate represents a propagation distance of the signal in the x direction, and a vertical coordinate represents normalized signal strength. Similar to FIG. 5A, $\psi$ is 0, the range of the second phase is also 0, and there is only one peak in a curve, indicating that the waveform includes one main lobe. In addition, curves corresponding to z=0 m, z=0.3 m, and z=0.5 m overlap each other, indicating that the beam signal exhibits the non-diffracting characteristic.

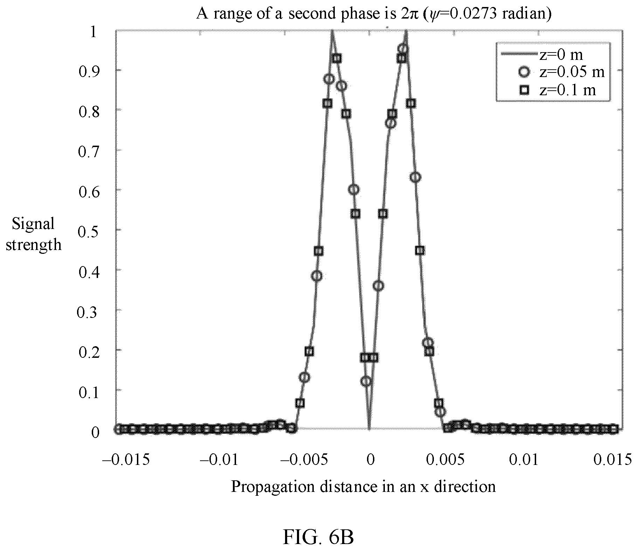

With reference to FIG. 5B, FIG. 6B is a diagram of a relationship between signal strength and a propagation distance of a space-time wave packet signal present when $\Psi$ is 0.0273 radian. Similar to FIG. 5B, when $\Psi$ is 0.0273 radian, a corresponding range of the second phase is $2\pi$, and there are two peaks in a curve, indicating that the waveform includes two main lobes. In addition, curves corresponding to z=0 m, z=0.3 m, and z=0.5 m overlap each other, indicating that the space-time wave packet signal exhibits the non-diffracting characteristic when $\psi$ is 0.0273 radian.

In another possible implementation, the second phase is included in a preset distribution range and a size of the preset distribution range is not an integer multiple of $2\pi$. Optionally, the second phase may be randomly selected from the preset distribution range $[\gamma_0, \gamma_0 + \gamma]$. Generally, a smaller preset distribution range indicates a smaller value of $\gamma$ and a better non-diffracting characteristic.

Optionally, that the second phase is obtained based on the symbol includes: The second phase is included in the preset distribution range, where different symbols correspond to different preset ranges. In other words, the different symbols correspond to different values of $\gamma$.

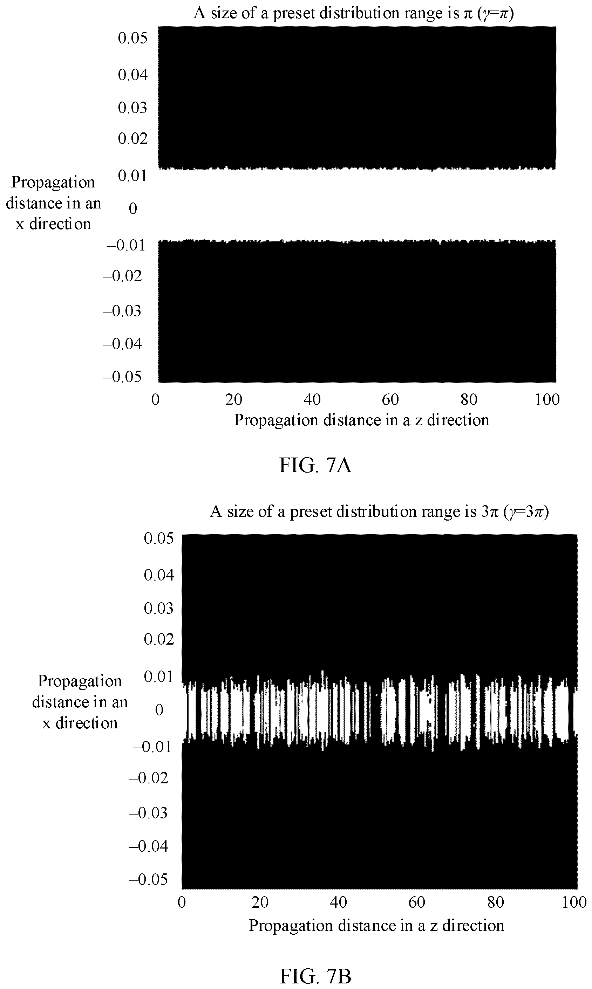

For example, FIG. 7A is a simulation diagram of a waveform of a space-time wave packet signal present when $\gamma$ is $\pi$. A size of the preset distribution range including the second phase is $\pi$. A horizontal coordinate represents a signal transmission distance in a z direction, namely, a direction of beam signal transmission, measured in meters. A vertical coordinate represents a signal transmission distance in an x direction that is perpendicular to the z direction, measured in meters.

For example, FIG. 7B is a simulation diagram of a waveform of a space-time wave packet signal present when $\gamma$ is $3\pi$. A size of the preset distribution range including the second phase $3\pi$.

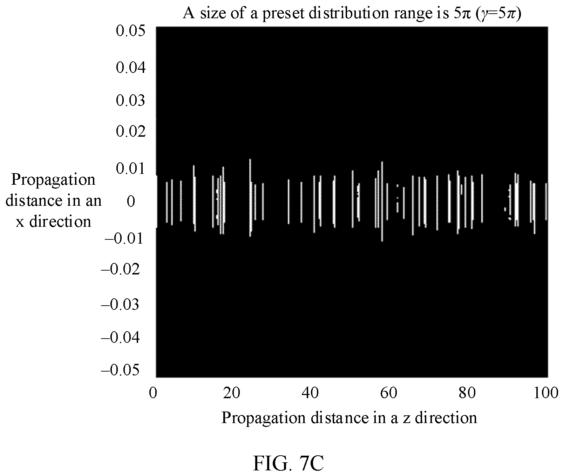

For example, FIG. 7C is a simulation diagram of a waveform of a space-time wave packet signal present when $\gamma$ is $5\pi$. A size of the preset distribution range including the second phase is $5\pi$. It can be learned from FIG. 7B and FIG. 7C that, after the space-time wave packet signal propagates to a specific distance, signal strength decreases slightly (the waveform slightly becomes sparse), but not obviously.

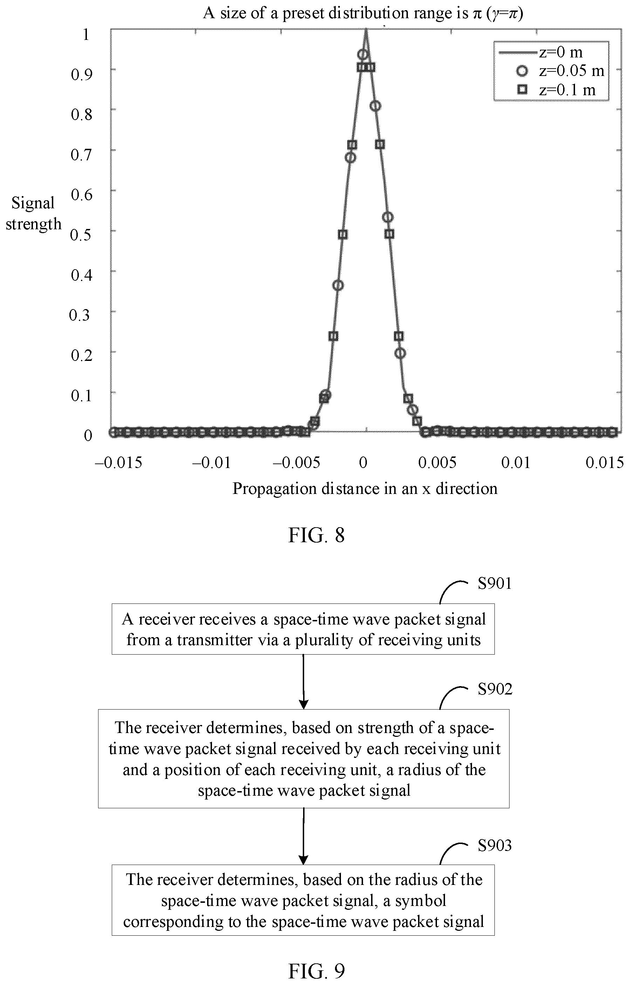

With reference to FIG. 7A, FIG. 8 is a diagram of a relationship between signal strength and a propagation distance of a space-time wave packet signal present when $\gamma$ is $\pi$. A horizontal coordinate represents a transmission distance of the signal in the x direction, and a vertical coordinate represents normalized signal strength. A size of the preset distribution range including the second phase is $\pi$. In addition, curves corresponding to z=0 m, z=0.05 m, and z=0.1 m basically overlap each other, indicating that the space-time wave packet signal exhibits the non-diffracting characteristic when $\gamma$ is $\pi$.

Step S303: The transmitter sends a space-time wave packet signal via the target transmitting unit, where the space-time wave packet signal includes modulated signals corresponding to the plurality of subcarriers of the target transmitting unit.

Optionally, the modulated signal in this embodiment of this application may alternatively be an orthogonal frequency division multiplexing (orthogonal frequency division multiplexing, OFDM) signal. The signal transmission method provided in this embodiment of this application may be used in combination with an OFDM technology, to help improve spectral efficiency and signal processing efficiency, and enhance flexibility of spectrum application. Specifically, duration T of each space-time wave packet signal may be set to be equal to a reciprocal of a subcarrier spacing $\Delta f$, that is, T $=1/\Delta f$. A cyclic prefix (cyclic prefix, CP) may be further added to the space-time wave packet signal, that is, a plurality of last sampling points of a modulated digital signal of the subcarrier are replicated based on one symbol, and are added to the front of the digital signal as a digital modulation signal corresponding to one symbol.

According to the signal transmission method provided in this embodiment of this application, because different subcarriers correspond to different initial second phases, when a plurality of modulated signals that correspond to a plurality of subcarriers and that are sent by each transmitting unit are superimposed, a probability of simultaneous occurrence of peaks or large values is greatly reduced, to effectively reduce a peak-to-average ratio.

Simulation results show that a maximum peak-to-average ratio of the beam signal shown in FIG. 5A may be 26 dB, a maximum peak-to-average ratio of the space-time wave packet signal shown in FIG. 5B may be reduced to 21 dB when $\Psi$ is 0.0273 radian, and a maximum peak-to-average ratio of the space-time wave packet signal shown in FIG. 5C may be further reduced to 19 dB when $\Psi$ is 0.0683 radian.

Simulation results show that a maximum peak-to-average ratio of the space-time wave packet signal shown in FIG. 7A may be reduced from 26 dB, a maximum peak-to-average ratio of the beam signal, to 19 dB when $\gamma$ is $\pi$, and a maximum peak-to-average ratio of the space-time wave packet signal shown in FIG. 7B may be further reduced to 8 dB when $\gamma$ is $3\pi$.

In addition, for a specific subcarrier, for example, a first subcarrier, a second phase corresponding to the first subcarrier is fixed. Therefore, for first subcarriers of different transmitting units, for example, a first subcarrier of a first transmitting unit and a first subcarrier of a second transmitting unit, a phase difference is only a difference between a first phase corresponding to the first subcarrier of the first transmitting unit and a first phase corresponding to the first subcarrier of the second transmitting unit. The first phase satisfies a spatiotemporal coupling relationship, that is, the first phase is related to a frequency of a subcarrier and a spatial position of a transmitting unit. Therefore, the difference between the first phase corresponding to the first subcarrier of the first transmitting unit and the first phase corresponding to the first subcarrier of the second transmitting unit is related to a frequency of the first subcarrier, a spatial position of the first transmitting unit, and a spatial position of the second transmitting unit, and is also fixed. In other words, for specific subcarriers of different transmitting units, relative phases still satisfy the spatiotemporal coupling relationship. Therefore, the signal transmission method provided in this embodiment of this application does not damage a non-diffracting characteristic of the space-time wave packet signal.

A signal processing procedure at the transmitter end is mainly described in the foregoing embodiment, and the following describes a corresponding signal processing procedure at a receiver end. For example, FIG. 9 is a signal transmission method according to an embodiment of this application. The signal transmission method is applied to a receiver including a plurality of receiving units. According to the signal transmission method, steps of determining a symbol are provided, to parse symbol information carried in a received space-time wave packet signal. The signal transmission method includes the following steps:

Step S901: The receiver receives a space-time wave packet signal from a transmitter via the plurality of receiving units.

In this embodiment of this application, there may be a known reference symbol used to assist the receiver in determining a symbol corresponding to the space-time wave packet signal. Before step S901, the signal transmission method provided in this embodiment of this application further includes: The receiver receives, from the transmitter via the plurality of receiving units, a reference space-time wave packet signal corresponding to a reference symbol; and the receiver determines the radius of the reference space-time wave packet signal based on strength of the reference space-time wave packet signal received by each receiving unit and a distance between each receiving unit and a centroid corresponding to the reference symbol.

The following provides a definition of the centroid corresponding to the reference symbol when there is one reference symbol or when there are a plurality of reference symbols, to further determine the distance between each receiving unit and the centroid corresponding to the reference symbol.

In a possible implementation, there is one reference symbol. The centroid corresponding to the reference symbol is a receiving centroid of the reference space-time wave packet signal corresponding to the reference symbol. For example, it is assumed that an index of the reference symbol is $p$, and the receiving centroid of the corresponding reference space-time wave packet signal is $(x_p, y_p, z_p)$. In this case, the centroid $(x_0, y_0, z_0)$ corresponding to the reference symbol may satisfy $x_0 = x_p$, $y_0 = y_p$, and $z_0 = z_p$.

A receiving centroid of a signal may be defined as follows: Assuming that a receiver includes $m$ receiving units, a spatial position of a $j$th receiving unit is $(x_j, y_j, z_j)$, and strength of a signal received by the $j$th receiving unit is $P_j$, a receiving centroid of the signal may be expressed as $\left( \dfrac{\sum\limits_{j=1}^{m} P_j * x_j}{\sum\limits_{j=1}^{m} P_j}, \dfrac{\sum\limits_{j=1}^{m} P_j * y_j}{\sum\limits_{j=1}^{m} P_j}, \dfrac{\sum\limits_{j=1}^{m} P_j * z_j}{\sum\limits_{j=1}^{m} P_j} \right)$.

In another possible implementation, there are a plurality of reference symbols. The centroid corresponding to the reference symbol is an average centroid of receiving centroids of the plurality of reference space-time wave packet signals corresponding to the plurality of reference symbols. For example, it is assumed that there are a total of n symbols, and a radius of a space-time wave packet signal corresponding to each symbol increases sequentially. In an ideal case, the space-time wave packet signal presents circular or annular spots on a receiving plane, and it is assumed herein that a radius difference between adjacent circles or annuli is a fixed value. In the $n$ symbols, there are two reference symbols, indexes are $p$ and $q$, and receiving centroids of corresponding reference space-time wave packet signals are $(x_p, y_p, z_p)$ and $(x_q, y_q, z_q)$ respectively. In this case, centroids $(x_0, y_0, z_0)$ corresponding to the reference symbols may satisfy $x_0 =(x_p +x_q)/2$, $y_0=(y_p +y_q)/2$, and $z_0 = (z_p+z_q)/2$.

For example, assuming that the receiver receives, from the transmitter via m receiving units, a reference space-time wave packet signal corresponding to a reference symbol whose index is $q$, a spatial position of an $i$th receiving unit is $(x_i, y_i, z_i)$, and strength of the reference space-time wave packet signal received by the $i$th receiving unit is $p_{gi}$, a distance between the $j$th receiving unit and a centroid corresponding to the reference symbol may be $d_i = \sqrt{\left(x_i - x_0\right)^2 + \left(y_i - y_0\right)^2 + \left(y_i - y_0\right)^2}$. For a manner of calculating the centroid $(x_0, y_0, z_0)$ corresponding to the reference symbol, refer to the foregoing embodiment. Details are not described herein again. A radius $r_p$ of the reference space-time wave packet signal may satisfy Formula (19):

$$r_p = \frac{\sum\limits_{i=1}^{m} P_{qi} d_i}{\sum\limits_{i=1}^{m} P_{qi}}$$

Formula (19)

A radius of a reference space-time wave packet signal corresponding to each reference symbol may be calculated according to Formula (19).

Step S902: The receiver determines, based on strength of a space-time wave packet signal received by each receiving unit and a position of each receiving unit, a radius of the space-time wave packet signal.

Optionally, the "position of each receiving unit" in step S902 may be the distance between the receiving unit and the centroid corresponding to the reference symbol.

Similar to derivation of Formula (19), assuming that the receiver receives, from the transmitter via the m receiving units, a space-time wave packet signal, a spatial position of the $i^{th}$ receiving unit is $(x_i, y_i, z_i)$, and strength of the space-time wave packet signal received by the $i^{th}$ receiving unit is $P_{si}$, a distance between the $i^{th}$ receiving unit and a centroid corresponding to the reference symbol may be $d_i = \sqrt{(x_i - x_0)^2 + (y_i - y_0)^2 + (y_i - y_0)^2}$. For a manner of calculating the centroid $(x_0, y_0, z_0)$ corresponding to the reference symbol, refer to the foregoing embodiment. Details are not described herein again. A radius $r_s$ of the space-time wave packet signal may satisfy Formula (20):

$$r_s = \frac{\sum\limits_{i=1}^{m} P_{si} d_i}{\sum\limits_{i=1}^{m} P_{si}}$$

Formula (20)

Step S903: The receiver determines, based on the radius of the space-time wave packet signal, a symbol corresponding to the space-time wave packet signal.

Optionally, step S903 specifically includes: The receiver obtains a relationship between an index of a reference symbol and a radius of a reference space-time wave packet signal corresponding to the reference symbol, where the index of the reference symbol is used to identify the reference symbol; and the receiver determines, based on the radius of the space-time wave packet signal and the relationship, an index of the symbol corresponding to the space-time wave packet signal, and obtains the symbol based on the index of the symbol.

The following provides the relationship between the index of the reference symbol and the radius of the reference space-time wave packet signal present when there is one reference symbol or when there are a plurality of reference symbols.

In a possible implementation, there is one reference symbol. The relationship between the index of the reference symbol and the radius of the reference space-time wave packet signal corresponding to the reference symbol is a ratio of the index of the reference symbol to the radius of the reference space-time wave packet signal.

For example, assuming that the index of the reference symbol is $p$, the radius of the reference space-time wave packet signal is $r_p$, and the radius of the space-time wave packet signal is $r_s$, the relationship between the index of the reference symbol and the radius of the reference space-time wave packet signal may be $P / r_p$, and an index of a symbol corresponding to a space-time wave packet signal may be $u[r_s{}^* p / r_p]$, where $u[x]$ represents a minimum integer that is not less than x.

In another possible implementation, there are a plurality of reference symbols. The relationship between the index of the reference symbol and the radius of the reference space-time wave packet signal corresponding to the reference symbol is a ratio of a first difference to a second difference, where the first difference is a difference between indexes of different reference symbols, and the second difference is a difference between radiuses of different reference space-time wave packet signals.

For example, assuming that indexes of reference symbols are $p$ and $q$, radiuses of reference space-time wave packet signals are $r_p$ and $r_q$ respectively, and the radius of the space-time wave packet signal is $r_s$, the relationship between the index of the reference symbol and the radius of the reference space-time wave packet signal may be $(p-q)/(r_p-r_q)$, and an index of a symbol corresponding to a space-time wave packet signal may be $u[r_s{}^*(p-q)/(r_p-r_s)]$, where $u[x]$ represents a minimum integer that is not less than x.

When there are more than two reference symbols, for any two reference symbols, a symbol corresponding to a space-time wave packet signal may be determined by using a radius of the space-time wave packet signal, indexes of the reference symbols, and radiuses of corresponding reference space-time wave packet signals. Alternatively, for every two reference symbols, a symbol corresponding to a space-time wave packet signal may be determined by using a radius of the space-time wave packet signal, indexes of the reference symbols, and radiuses of corresponding reference space-time wave packet signals, to obtain a plurality of determining results, and a most frequently occurring determining result is used as a final determining result.

The foregoing describes a method for determining a symbol corresponding to a space-time wave packet signal when there are one or two reference symbols. When there is no reference symbol, a specific example of step S902 is: assuming that the receiver includes the m receiving units, and the spatial position of the $i^{th}$ receiving unit is $(x_i, y_i, z_i)$, a

reference central position $(x_0, y_0, z_0)$ may be $\left( \dfrac{\sum\limits_{i=1}^{m} x_i}{m}, \dfrac{\sum\limits_{i=1}^{m} y_i}{m}, \dfrac{\sum\limits_{i=1}^{m} z_i}{m} \right)$ . A radius $r_s$ of a space-time wave packet signal may still be obtained according to Formula (20), and a difference lies only in that the reference center position replaces the centroid corresponding to the reference symbol.

In addition, when there is no reference symbol, step S903 may include: determining, based on the radius of the space-time wave packet signal and a minimum value of a difference between radiuses of space-time wave packet signals corresponding to different symbols, an index of a symbol corresponding to the space-time wave packet signal, and obtaining the symbol based on the index of the symbol.

For example, the index of the symbol corresponding to the space-time wave packet signal may be $u[r_s / \Delta r]$, where $r_s$ represents the radius of the space-time wave packet signal. It is assumed that a radius of a space-time wave packet signal corresponding to each symbol increases successively. In an ideal case, the space-time wave packet signal presents circular or annular spots on a receiving plane, and it is assumed herein that a radius difference $\Delta r$ between adjacent circles or annuli is a fixed value. $u[x]$ represents a minimum integer that is not less than $x$.

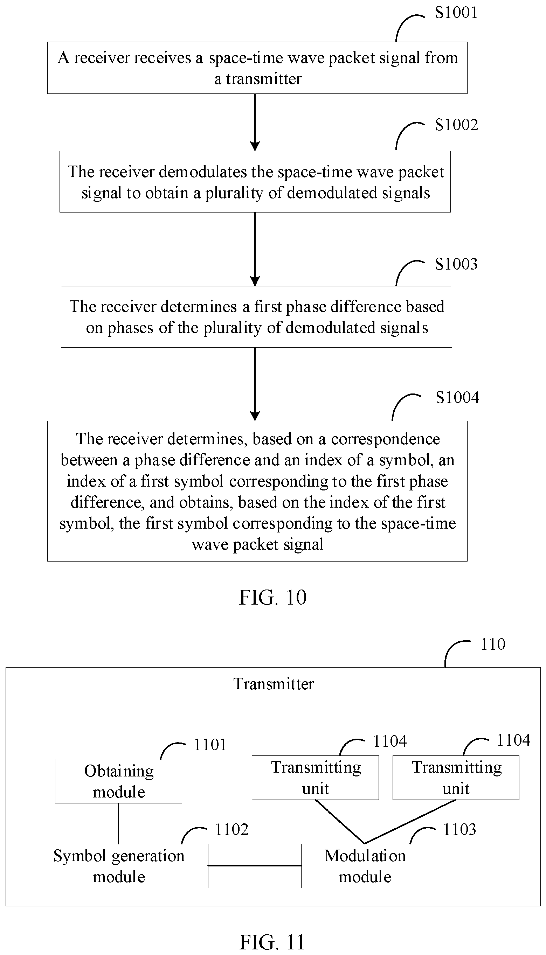

In addition to the signal transmission method shown in FIG. 9, a signal transmission method shown in FIG. 10 may be further used at the receiver end. For example, the signal transmission method shown in FIG. 10 is applied to the receiver. The signal transmission method provides steps of determining a symbol based on a plurality of demodulated signals, to parse symbol information carried in a received space-time wave packet signal. The signal transmission method includes the following steps:

Step S1001: The receiver receives a space-time wave packet signal from a transmitter where the space-time wave packet signal includes modulated signals corresponding to a plurality of subcarriers of a target transmitting unit of the transmitter.

In this embodiment of this application, it is assumed that phases of the modulated signals are random phases, and a distribution range of the phases is $[\Psi_0, \Psi_0 + \Psi]$. It may be specified that a phase corresponding to a symbol needs to be in a specified distribution range, that is, if there are $n$ symbols, and a phase corresponding to an $i^{th}$ symbol is $\alpha_i$, each value of $i$ from 1 to $n$ satisfies $\alpha_i \in [\Psi_0, \Psi_0 + \Psi]$. Further, to satisfy randomization, a random scrambling code may be introduced. For example, M phases are selected from the distribution range $[\Psi_0, \Psi_0 + \Psi]$, and a pseudo-random sequence $\{x_1, x_2,..., x_n\}$ is preset. Each value in the pseudo-random sequence is any integer from 1 to M and is different from other values in the pseudo-random sequence, and a $[(i+x_i)\%M + 1]^{th}$ phase may be selected for the $i^{th}$ symbol.

Step S1002: The receiver demodulates the space-time wave packet signal to obtain a plurality of demodulated signals.

For example, assuming that the received space-time wave packet signal is $\sum\limits_{i=1}^{M} e^{j\left( 2\pi f_i t + \varphi_{i_p} + \beta_i \right)}$ , and one transmitting unit corresponds to M subcarriers, demodulation may include multiplying by a frequency of a $k^{th}$ subcarrier to obtain a $k^{th}$ signal $\sum\limits_{i=1}^{M} e^{j\left[ 2\pi (f_i - f_k) t + \varphi_0 + \beta_i \right]} = \sum\limits_{\substack{i=1 \\ i \neq k}}^{M} e^{j\left[ 2\pi (f_i - f_k) t + \varphi_0 + \beta_i \right]} + e^{j(\varphi_0 + \beta_k)}$ , where $1 \leq k \leq M$, $k$ is a positive integer,

and $\varphi_0$ represents a spatial phase corresponding to a position of the receive end after non-diffracting focusing, and is known data. Demodulation may further include filtering, that is, the $k^{th}$ signal after filtering may be expressed as $e^{j(\varphi_0 + \beta_k)}$, so that it can be determined that a phase of a $k^{th}$ demodulated signal may be $\varphi_0 + \beta_k$.

Step S1003: The receiver obtains a first phase difference based on phases of the plurality of demodulated signals, where the first phase difference represents a phase relationship between two demodulated signals.

Optionally, the first phase difference is a difference between phases of two adjacent demodulated signals in the plurality of demodulated signals, or the first phase difference is an average value of differences between phases of a plurality of two adjacent demodulated signals in the plurality of demodulated signals. In this solution, the receiver uses the average value of the differences between the phases of the plurality of two adjacent demodulated signals as the first phase difference, to improve accuracy of the first phase difference, and further improve accuracy of determining the symbol. For example, the first phase difference may be a difference between the phase of the $k^{th}$ demodulated signal and a phase of a $k$ - 1 $^{th}$ demodulated signal, where $1 < k \leq M$, and $k$ is a positive integer. Alternatively, a phase of an $M^{th}$ demodulated signal is first calculated, then $M$ -1 phase differences between two adjacent demodulated signals is obtained, and finally, an average value of the $M$ -1 phase differences is used as the first phase difference.

Step S1004: The receiver determines, based on a correspondence between a phase difference and an index of a symbol, an index of a first symbol corresponding to the first phase difference, and obtains, based on the index of the first symbol, the first symbol corresponding to the space-time wave packet signal.

In embodiments of this application, the embodiment shown in FIG. 9 and the embodiment shown in FIG. 10 may be used in combination. For example, the embodiment shown in FIG. 9 is first repeatedly performed to obtain an initial symbol set including a plurality of possible determining symbols, and then the embodiment shown in FIG. 10 is performed to select, from the initial symbol set, a symbol closest to the determining result in the embodiment shown in FIG. 10 as a final determining result.

In the foregoing embodiments, serial transmission of the space-time wave packet signal is used as an example to describe the signal transmission methods at the transmitter end and the receiver end. During actual implementation, different space-time wave packet signals may be transmitted in parallel, to implement spatial multiplexing. For example, a plurality of space-time wave packet signals are superimposed and sent, and each space-time wave packet signal needs to carry symbol information. A simple method is to use amplitude information to carry the symbol information, that is, use a magnitude of transmit power of each space-time wave packet signal to represent transmitted symbol information. If there are $n$ symbols, there are $n$ types of transmit power.

Because both the transmitter and the receiver in the foregoing embodiments may use the architecture of the communication apparatus 200 shown in FIG. 2, actions of the transmitter in the foregoing embodiments may be performed by the processor 201 in the communication apparatus 200 shown in FIG. 2 by invoking the application code stored in the memory 203 to indicate the transmitter to perform, and actions of the receiver in the foregoing embodiments may be performed by the processor 201 in the communication apparatus 200 shown in FIG. 2 by invoking the application code stored in the memory 203 to indicate the receiver to perform. This is not limited in embodiments.

It may be understood that, in the foregoing embodiments, the method and/or the steps implemented by the transmitter may alternatively be implemented by a component (for example, a chip or a circuit) that may be used for the transmitter, and the methods and/or the steps implemented by the receiver may alternatively be implemented by a component (for example, a chip or a circuit) that may be used for the receiver.

The foregoing mainly describes the solutions provided in embodiments of this application. Correspondingly, embodiments of this application further provide a transmitter and a receiver that are configured to implement the foregoing methods. It may be understood that, to implement the foregoing functions, the transmitter or the receiver provided in embodiment of this application includes corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a specific function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the transmitter or the receiver may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

FIG. 11 is a diagram of a structure of a transmitter 110. The transmitter 110 includes: an obtaining module 1101, a symbol generation module 1102, a modulation module 1103, and a plurality of transmitting units 1104 (FIG. 11 schematically shows only two transmitting units 1104). A target transmitting unit 1104 is included in the plurality of transmitting units 1104.

For example, when the transmitter 110 is configured to implement a function of the transmitter in the method embodiment shown in FIG. 3, the obtaining module 1101 is configured to obtain an information source bit sequence; the symbol generation module 1102 is configured to generate at least one symbol based on the information source bit sequence; the modulation module 1103 is configured to modulate each subcarrier of the target transmitting unit 1104 based on the at least one symbol, to obtain a modulated signal corresponding to each subcarrier, and the target transmitting unit 1104 is configured to send a space-time wave packet signal.

For more detailed descriptions of the obtaining module 1101, the symbol generation module 1102, the modulation module 1103, and the transmitting unit 1104, refer to related descriptions in the method embodiment shown in FIG. 3.

When the transmitter 110 is the transmitter in the method embodiment shown in FIG. 3, in a simple embodiment, a person skilled in the art may figure out that the transmitter 110 may be in a form of the communication apparatus 200 shown in FIG. 2. For example, the processor 201 or the processor 207 in the communication apparatus 200 shown in FIG. 2 may invoke computer-executable instructions stored in the memory 203, so that the communication apparatus 200 performs the signal transmission method in the foregoing method embodiments. Specifically, functions/implementation processes of the obtaining module 1101, the symbol generation module 1102, and the modulation module 1103 in FIG. 11 may be implemented by the processor 201 or the processor 207 in the communication apparatus 200 shown in FIG. 2 by invoking the computer-executable instructions stored in the memory 203. A function/implementation process of the transmitting unit 1104 in FIG. 11 may be implemented by using a communication module connected to the communication interface 204 in FIG. 2.

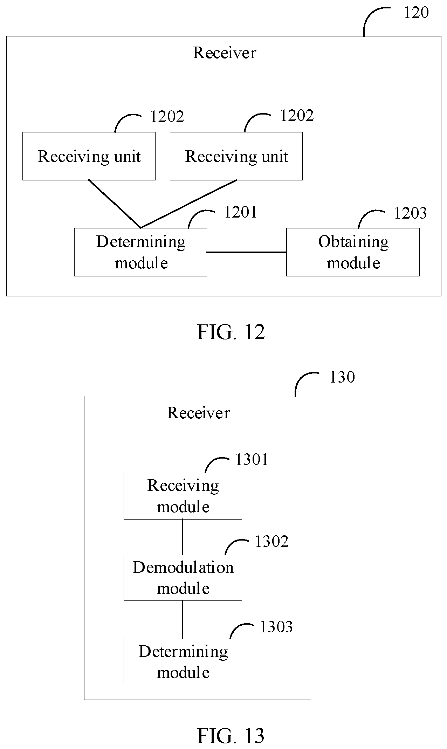

FIG. 12 is a diagram of a structure of a receiver 120. The receiver 120 includes a determining module 1201 and a plurality of receiving units 1202 (FIG. 12 schematically shows only two receiving units 1202). Optionally, the receiver 120 further includes an obtaining module 1203.

For example, when the receiver 120 is configured to implement a function of the receiver in the method embodiment shown in FIG. 9, the plurality of receiving units 1202 are configured to receive a space-time wave packet signal from a transmitter; the determining module 1201 is configured to determine, based on strength of a space-time wave packet signal received by each receiving unit and a position of each receiving unit, a radius of the space-time wave packet signal; and the determining module 1201 is further configured to determine, based on the radius of the space-time wave packet signal, a symbol corresponding to the space-time wave packet signal.

For more detailed descriptions of the determining module 1201, the receiving unit 1202, and the obtaining module 1203, refer to related descriptions in the method embodiment shown in FIG. 9.

When the receiver 120 is the receiver in the method embodiment shown in FIG. 9, in a simple embodiment, a person skilled in the art may figure out that the receiver 120 may be in a form of the communication apparatus 200 shown in FIG. 2. For example, the processor 201 or the processor 207 in the communication apparatus 200 shown in FIG. 2 may invoke computer-executable instructions stored in the memory 203, so that the communication apparatus 200 performs the signal transmission method in the foregoing method embodiments. Specifically, functions/implementation processes of the determining module 1201 and the obtaining module 1203 in FIG. 12 may be implemented by the processor 201 or the processor 207 in the communication apparatus 200 shown in FIG. 2 by invoking the computer-executable instructions stored in the memory 203. A function/implementation process of the receiving unit 1202 in FIG. 12 may be implemented by using a communication module connected to the communication interface 204 in FIG. 2.

FIG. 13 is another diagram of a structure of a receiver 130. The receiver 130 includes a receiving module 1301, a demodulation module 1302, and a determining module 1303.

For example, when the receiver 130 is configured to implement a function of the receiver in the method embodiment shown in FIG. 10, the receiving module 1301 is configured to receive a space-time wave packet signal from a transmitter; the demodulation module 1302 is configured to demodulate the space-time wave packet signal to obtain a plurality of demodulated signals; the determining module 1303 is configured to determine a first phase difference based on phases of the plurality of demodulated signals; and the determining module 1303 is further configured to: determine, based on a correspondence between a phase difference and an index of a symbol, an index of a first symbol corresponding to the first phase difference, and obtain, based on the index of the first symbol, the first symbol corresponding to the space-time wave packet signal.

For more detailed descriptions of the receiving module 1301, the demodulation module 1302, and the determining module 1303, refer to related descriptions in the method embodiment shown in FIG. 10.

When the receiver 130 is the receiver in the method embodiment shown in FIG. 10, in a simple embodiment, a person skilled in the art may figure out that the receiver 130 may be in a form of the communication apparatus 200 shown in FIG. 2. For example, the processor 201 or the processor 207 in the communication apparatus 200 shown in FIG. 2 may invoke computer-executable instructions stored in the memory 203, so that the communication apparatus 200 performs the signal transmission method in the foregoing method embodiments. Specifically, functions/implementation processes of the demodulation module 1302 and the determining module 1303 in FIG. 13 may be implemented by the processor 201 or the processor 207 in the communication apparatus 200 shown in FIG. 2 by invoking the computer-executable instructions stored in the memory 203. A function/implementation process of the receiving module 1301 in FIG. 13 may be implemented by using a communication module connected to the communication interface 204 in FIG. 2.

In this embodiment, the transmitter 110, the receiver 120, or the receiver 130 may be presented in a form of functional modules obtained through division in an integrated manner. The module herein may be an ASIC, a circuit, a processor that executes one or more software or firmware programs, a memory, an integrated logic circuit, and/or another component capable of providing the foregoing functions.

Because the transmitter 110, the receiver 120, or the receiver 130 provided in embodiments may perform the signal transmission methods, for technical effects that can be implemented by the transmitter 110, the receiver 120, or the receiver 130, refer to the foregoing method embodiments. Details are not described herein again.

It should be noted that one or more of the foregoing modules or units may be implemented by using software, hardware, or a combination thereof. When any one of the foregoing modules or units is implemented by software, the software exists in a form of a computer program instruction, and is stored in the memory. The processor may be configured to execute the program instruction and implement the foregoing method procedure. The processor may be built into a SoC (system on chip) or an ASIC, or may be an independent semiconductor chip. In addition to the core configured to perform calculation or processing by executing a software instruction, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a chip system, including: at least one processor and an interface, where the at least one processor is coupled to a memory by using an interface, and when the at least one processor executes a computer program or instructions in the memory, the method in any one of the foregoing method embodiments is performed. In a possible implementation, the communication apparatus further includes the memory. Optionally, the chip system may include a chip, or may include a chip and another discrete device. This is not specifically limited in embodiments of this application.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, like a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "including" (comprising) does not exclude another component or another step, and "a" or "one" does not exclude a plurality. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the accompanying claims, and are considered as any of or all modifications, variations, combinations or equivalents that cover the scope of this application. It is clearly that a person skilled in the art can make various modifications and variations to this application without departing from the spirit and scope of this application. In this case, this application is intended to cover these modifications and variations of this application provided that they fall within the scope of protection defined by the following claims and their equivalent technologies.

## Claims

1. A signal transmission method, wherein the signal transmission method is applied to a transmitter, the transmitter comprises a plurality of transmitting units, and one transmitting unit corresponds to a plurality of subcarriers; and the method comprises:

obtaining an information source bit sequence, and generating at least one symbol based on the information source bit sequence;
modulating each subcarrier of a target transmitting unit based on the at least one symbol, to obtain a modulated signal corresponding to each subcarrier, wherein the target transmitting unit is comprised in the plurality of transmitting units, a phase of the modulated signal is determined based on a first phase and a second phase, the first phase is obtained based on a distance between the target transmitting unit and a reference position and a frequency of the subcarrier, a first phase of a modulated signal corresponding to any subcarrier at the reference position is zero, frequency spacings between a plurality of subcarriers of the target transmitting unit are the same or different, the second phase is obtained based on the symbol, and different subcarriers correspond to different second phases; and

sending a space-time wave packet signal via the target transmitting unit, wherein the space-time wave packet signal comprises modulated signals corresponding to the plurality of subcarriers of the target transmitting unit.

2. The method according to claim 1, wherein the second phase is in a linear relationship with an index of the subcarrier, or the second phase is comprised in a preset distribution range and a size of the preset distribution range is not an integer multiple of $2\pi$.

3. The method according to claim 2, wherein

   that the second phase is obtained based on the symbol comprises: the second phase is obtained based on the index of the subcarrier, a slope corresponding to the symbol, and a constant, wherein different symbols correspond to different slopes; or

   that the second phase is obtained based on the symbol comprises: the second phase is comprised in the preset distribution range, wherein different symbols correspond to different preset ranges.

4. The method according to any one of claims 1 to 3, wherein the modulated signal is an orthogonal frequency division multiplexing OFDM signal.

5. A signal transmission method, wherein the signal transmission method is applied to a receiver, and the receiver comprises a plurality of receiving units; and the method comprises:

   receiving a space-time wave packet signal from a transmitter via the plurality of receiving units;

   determining, based on strength of a space-time wave packet signal received by each receiving unit and a position of each receiving unit, a radius of the space-time wave packet signal; and

   determining, based on the radius of the space-time wave packet signal, a symbol corresponding to the space-time wave packet signal.

6. The method according to claim 5, wherein determining, based on the radius of the space-time wave packet signal, the symbol corresponding to the space-time wave packet signal comprises:

   obtaining a relationship between an index of a reference symbol and a radius of a reference space-time wave packet signal corresponding to the reference symbol, wherein the index of the reference symbol is used to identify the reference symbol; and

   determining, based on the radius of the space-time wave packet signal and the relationship, an index of the symbol corresponding to the space-time wave packet signal, and obtaining the symbol based on the index of the symbol.

7. The method according to claim 6, wherein there is at least one reference symbol; and

   when there is one reference symbol, the relationship between the index of the reference symbol and the radius of the reference space-time wave packet signal corresponding to the reference symbol is a ratio of the index of the reference symbol to the radius of the reference space-time wave packet signal; or

   when there are a plurality of reference symbols, the relationship between the index of the reference symbol and the radius of the reference space-time wave packet signal corresponding to the reference symbol is a ratio of a first difference to a second difference, wherein the first difference is a difference between indexes of the different reference symbols, and the second difference is a difference between radiuses of the different reference space-time wave packet signals.

8. The method according to any one of claims 5 to 7, wherein before determining, based on the strength of the space-time wave packet signal received by each receiving unit and the position of each receiving unit, the radius of the space-time wave packet signal, the method further comprises:

receiving, from the transmitter via the plurality of receiving units, a reference space-time wave packet signal corresponding to a reference symbol; and

determining the radius of the reference space-time wave packet signal based on strength of the reference space-time wave packet signal received by each receiving unit and a distance between each receiving unit and a centroid corresponding to the reference symbol.

9. The method according to any one of claims 5 to 8, wherein the position of the receiving unit is the distance between the receiving unit and the centroid corresponding to the reference symbol, wherein

when there is one reference symbol, the centroid corresponding to the reference symbol is a receiving centroid of the reference space-time wave packet signal corresponding to the reference symbol; or when there are a plurality of reference symbols, the centroid corresponding to the reference symbol is an average centroid of receiving centroids of a plurality of reference space-time wave packet signals corresponding to the plurality of reference symbols.

10. The method according to claim 5, wherein determining, based on the radius of the space-time wave packet signal, the symbol corresponding to the space-time wave packet signal comprises:

determining, based on the radius of the space-time wave packet signal and a minimum value of a difference between radiuses of space-time wave packet signals corresponding to different symbols, an index of the symbol corresponding to the space-time wave packet signal, and obtaining the symbol based on the index of the symbol.

11. A signal transmission method, wherein the signal transmission method is applied to a receiver, and the method comprises:

receiving a space-time wave packet signal from a transmitter, wherein the space-time wave packet signal comprises modulated signals corresponding to a plurality of subcarriers of a target transmitting unit of the transmitter;

demodulating the space-time wave packet signal to obtain a plurality of demodulated signals;

determining a first phase difference based on phases of the plurality of demodulated signals, wherein the first phase difference represents a phase relationship between two demodulated signals; and

determining, based on a correspondence between a phase difference and an index of a symbol, an index of a first symbol corresponding to the first phase difference, and obtaining, based on the index of the first symbol, the first symbol corresponding to the space-time wave packet signal.

12. The method according to claim 11, wherein the first phase difference is a difference between phases of two adjacent demodulated signals in the plurality of demodulated signals, or the first phase difference is an average value of differences between phases of a plurality of two adjacent demodulated signals in the plurality of demodulated signals.

13. A transmitter, wherein the transmitter comprises: an obtaining module, a symbol generation module, a modulation module, and a plurality of transmitting units, wherein one transmitting unit corresponds to a plurality of subcarriers, and a target transmitting unit is comprised in the plurality of transmitting units;

the obtaining module is configured to obtain an information source bit sequence;

the symbol generation module is configured to generate at least one symbol based on the information source bit sequence;

the modulation module is configured to modulate each subcarrier of the target transmitting unit based on the at least one symbol, to obtain a modulated signal corresponding to each subcarrier, wherein a phase of the modulated signal is determined based on a first phase and a second phase, the first phase is obtained based on a distance between the target transmitting unit and a reference position and a frequency of the subcarrier, the first phase of a modulated signal corresponding to any subcarrier at the reference position is zero, frequency spacings between a plurality of subcarriers of the target transmitting unit are the same or different, the second phase is obtained based on the symbol, and different subcarriers correspond to different second phases; and

the target transmitting unit is configured to send a space-time wave packet signal, wherein the space-time wave packet signal comprises modulated signals corresponding to the plurality of subcarriers of the target transmitting unit.

14. The transmitter according to claim 13, wherein the second phase is in a linear relationship with an index of the subcarrier, or the second phase is comprised in a preset distribution range and a size of the preset distribution range is not an integer multiple of $2\pi$.

15. The transmitter according to claim 14, wherein

that the second phase is obtained based on the symbol comprises: the second phase is obtained based on the index of the subcarrier, a slope corresponding to the symbol, and a constant, wherein different symbols correspond to different slopes; or
that the second phase is obtained based on the symbol comprises: the second phase is comprised in the preset distribution range, wherein different symbols correspond to different preset ranges.

16. The transmitter according to any one of claims 13 to 15, wherein the modulated signal is an orthogonal frequency division multiplexing OFDM signal.

17. A receiver, wherein the receiver comprises a determining module and a plurality of receiving units, wherein

the plurality of receiving units are configured to receive a space-time wave packet signal from a transmitter;
the determining module is configured to determine, based on strength of a space-time wave packet signal received by each receiving unit and a position of each receiving unit, a radius of the space-time wave packet signal; and
the determining unit is further configured to determine, based on the radius of the space-time wave packet signal, a symbol corresponding to the space-time wave packet signal.

18. The receiver according to claim 17, wherein the receiver further comprises: an obtaining module; and
that the determining unit is further configured to determine, based on the radius of the space-time wave packet signal, the symbol corresponding to the space-time wave packet signal comprises:
the determining unit is configured to: obtain, by using the obtaining module, a relationship between an index of a reference symbol and a radius of a reference space-time wave packet signal corresponding to the reference symbol, wherein the index of the reference symbol is used to identify the reference symbol; and determine, based on the radius of the space-time wave packet signal and the relationship, an index of the symbol corresponding to the space-time wave packet signal, and obtain the symbol based on the index of the symbol.

19. The receiver according to claim 18, wherein there is at least one reference symbol; and

when there is one reference symbol, the relationship between the index of the reference symbol and the radius of the reference space-time wave packet signal corresponding to the reference symbol is a ratio of the index of the reference symbol to the radius of the reference space-time wave packet signal; or
when there are a plurality of reference symbols, the relationship between the index of the reference symbol and the radius of the reference space-time wave packet signal corresponding to the reference symbol is a ratio of a first difference to a second difference, wherein the first difference is a difference between indexes of the different reference symbols, and the second difference is a difference between radiuses of the different reference space-time wave packet signals.

20. The receiver according to any one of claims 17 to 19, wherein

the plurality of receiving units are further configured to receive, from the transmitter, a reference space-time wave packet signal corresponding to a reference symbol; and
the determining module is further configured to determine the radius of the reference space-time wave packet signal based on strength of the reference space-time wave packet signal received by each receiving unit and a distance between each receiving unit and a centroid corresponding to the reference symbol.

21. The receiver according to any one of claims 17 to 20, wherein the position of the receiving unit is the distance between the receiving unit and the centroid corresponding to the reference symbol, wherein
when there is one reference symbol, the centroid corresponding to the reference symbol is a receiving centroid of the reference space-time wave packet signal corresponding to the reference symbol; or when there are a plurality of reference symbols, the centroid corresponding to the reference symbol is an average centroid of receiving centroids of a plurality of reference space-time wave packet signals corresponding to the plurality of reference symbols.

22. The receiver according to claim 17, wherein that the determining unit is further configured to determine, based on the radius of the space-time wave packet signal, the symbol corresponding to the space-time wave packet signal comprises:

the determining unit is configured to: determine, based on the radius of the space-time wave packet signal and a minimum value of a difference between radiuses of space-time wave packet signals corresponding to different symbols, an index of the symbol corresponding to the space-time wave packet signal, and obtain the symbol based on the index of the symbol.

23. A receiver, wherein the receiver comprises a receiving module, a demodulation module, and a determining module, wherein

the receiving module is configured to receive a space-time wave packet signal from a transmitter, wherein the space-time wave packet signal comprises modulated signals corresponding to a plurality of subcarriers of a target transmitting unit of the transmitter;
the demodulation module is configured to demodulate the space-time wave packet signal to obtain a plurality of demodulated signals;
the determining module is configured to determine a first phase difference based on phases of the plurality of demodulated signals, wherein the first phase difference represents a phase relationship between two demodulated signals; and
the determining module is further configured to: determine, based on a correspondence between a phase difference and an index of a symbol, an index of a first symbol corresponding to the first phase difference, and obtain, based on the index of the first symbol, the first symbol corresponding to the space-time wave packet signal.

24. The receiver according to claim 23, wherein the first phase difference is a difference between phases of two adjacent demodulated signals in the plurality of demodulated signals, or the first phase difference is an average value of differences between phases of a plurality of two adjacent demodulated signals in the plurality of demodulated signals.

25. A communication apparatus, comprising a memory and a processor coupled to the memory, wherein the memory is configured to store a program, and the processor is configured to execute the program stored in the memory; and when the communication apparatus runs, the processor runs the program, to enable the communication apparatus to perform the method according to any one of claims 1 to 4, or enable the communication apparatus to perform the method according to any one of claims 5 to 10, or enable the communication apparatus to perform the method according to claim 11 or 12.

26. A computer-readable storage medium, wherein the computer-readable storage medium stores a computer program, and when the computer program is executed by a computer, the computer is enabled to perform the method according to any one of claims 1 to 4, or the computer is enabled to perform the method according to any one of claims 5 to 10, or the computer is enabled to perform the method according to claim 11 or 12.

27. A communication system, comprising a transmitter configured to perform the method according to any one of claims 1 to 4, and a receiver configured to perform the method according to any one of claims 5 to 10; or comprising a transmitter configured to perform the method according to any one of claims 1 to 4, and a receiver configured to perform the method according to claim 11 or 12.

Transmitting
unit 1011

Transmitter 101

...

...

...

...

10

Space-time wave
packet signal

Receiver
102

FIG. 1

200

201

207

203

Processor

CPU 0

CPU 1

Processor

CPU 0

CPU 1

Memory

202

204

205

206

Communication
interface

Output device

Input device

FIG. 2

S301

A transmitter obtains an information source bit sequence, and generates at least one symbol based on the information source bit sequence

S302

The transmitter modulates each subcarrier of a target transmitting unit based on the at least one symbol, to obtain a modulated signal corresponding to each subcarrier

S303

The transmitter sends a space-time wave packet signal via the target transmitting unit

FIG. 3

FIG. 4

A range of a second phase is 0 ($\psi$=0)

Propagation distance in an x direction

Propagation distance in a z direction

FIG. 5A

A range of a second phase is 2π ($\psi$=0.0273 radian)

Propagation distance in an x direction

Propagation distance in a z direction

FIG. 5B

A range of a second phase is $5\pi$ ($\psi$=0.0683 radian)

Propagation distance in an x direction

Propagation distance in a z direction

FIG. 5C

A range of a second phase is 0 ($\psi$=0)

FIG. 6A

A range of a second phase is $2\pi$ ($\psi$=0.0273 radian)

FIG. 6B

A size of a preset distribution range is π (γ=π)

Propagation distance in an x direction

Propagation distance in a z direction

FIG. 7A

A size of a preset distribution range is 3π (γ=3π)

Propagation distance in an x direction

Propagation distance in a z direction

FIG. 7B

A size of a preset distribution range is $5\pi$ ($\gamma=5\pi$)

Propagation distance in an x direction

Propagation distance in a z direction

FIG. 7C

A size of a preset distribution range is $\pi$ ($\gamma=\pi$)

FIG. 8

FIG. 9

S1001

A receiver receives a space-time wave packet signal from a transmitter

S1002

The receiver demodulates the space-time wave packet signal to obtain a plurality of demodulated signals

S1003

The receiver determines a first phase difference based on phases of the plurality of demodulated signals

S1004

The receiver determines, based on a correspondence between a phase difference and an index of a symbol, an index of a first symbol corresponding to the first phase difference, and obtains, based on the index of the first symbol, the first symbol corresponding to the space-time wave packet signal

FIG. 10

110

Transmitter

1101
Obtaining module

1104
Transmitting unit

1104
Transmitting unit

1102
Symbol generation module

1103
Modulation module

FIG. 11

120

Receiver

1202

Receiving unit

1202

Receiving unit

1201

Determining module

1203

Obtaining module

FIG. 12

130

Receiver

1301

Receiving module

1302

Demodulation module

1303

Determining module

FIG. 13

# EP 4 625 837 A1

## INTERNATIONAL SEARCH REPORT

| International application No. |
| --- |
| **PCT/CN2023/142772** |

| **A. CLASSIFICATION OF SUBJECT MATTER** |
| --- |
| H04B7/06(2006.01)i |
| According to International Patent Classification (IPC) or to both national classification and IPC |

| **B. FIELDS SEARCHED** |
| --- |
| Minimum documentation searched (classification system followed by classification symbols) |
| IPC: H04B, H04L, H04W |
| Documentation searched other than minimum documentation to the extent that such documents are included in the fields searched |
| Electronic data base consulted during the international search (name of data base and, where practicable, search terms used) |
| CNTXT, DWPI, ENTXT, ENTXTC, WPABS, WPABSC, 3GPP, CJFD, CNKI: 波包, 波束, 光束, 波矢, 时空, 半径, 位置, 比特, 符号, 调制, 解调, 峰均比, 衍射, 相位, 子载波, wave packet, beam, space, time, radius, location, symbol, bit, modulat+, demodulat+, diffraction, phase, sub-carrier |

**C. DOCUMENTS CONSIDERED TO BE RELEVANT**

| Category* | Citation of document, with indication, where appropriate, of the relevant passages | Relevant to claim No. |
| --- | --- | --- |
| A | US 2022182272 A1 (QUALCOMM INC.) 09 June 2022 (2022-06-09) description, paragraphs 61-216 | 1-27 |
| A | CN 109818633 A (WUHAN SHIP COMMUNICATION RESEARCH INSTITUTE (722 RESEARCH INSTITUTE OF CHINA SHIPBUILDING INDUSTRY CORPORATION)) 28 May 2019 (2019-05-28) entire document | 1-27 |
| A | CN 113759575 A (UNIVERSITY OF SHANGHAI FOR SCIENCE AND TECHNOLOGY) 07 December 2021 (2021-12-07) entire document | 1-27 |
| A | US 2019182091 A1 (QUALCOMM INC.) 13 June 2019 (2019-06-13) entire document | 1-27 |
| A | US 2022392683 A1 (IMEC VZW) 08 December 2022 (2022-12-08) entire document | 1-27 |
| A | WO 2020106364 A2 (HANKOOKIN INC.) 28 May 2020 (2020-05-28) entire document | 1-27 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **09 February 2024** | **01 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/142772**

| Patent document cited in search report | | | Publication date (day/month/year) | Patent family member(s) | | | Publication date (day/month/year) |
|---|---|---|---|---|---|---|---|
| US | 2022182272 | A1 | 09 June 2022 | WO | 2022119625 | A1 | 09 June 2022 |
| | | | | EP | 4256762 | A1 | 11 October 2023 |
| CN | 109818633 | A | 28 May 2019 | CN | 109818633 | B | 02 March 2021 |
| CN | 113759575 | A | 07 December 2021 | None | | | |
| US | 2019182091 | A1 | 13 June 2019 | SG | 11202004123 | WA | 29 July 2020 |
| | | | | US | 10841143 | B2 | 17 November 2020 |
| | | | | EP | 3725052 | A1 | 21 October 2020 |
| | | | | WO | 2019118438 | A1 | 20 June 2019 |
| | | | | US | 2021014098 | A1 | 14 January 2021 |
| | | | | US | 11658857 | B2 | 23 May 2023 |
| US | 2022392683 | A1 | 08 December 2022 | EP | 4099571 | A1 | 07 December 2022 |
| WO | 2020106364 | A2 | 28 May 2020 | US | 2023333231 | A1 | 19 October 2023 |
| | | | | WO | 2020106364 | A9 | 25 June 2020 |
| | | | | WO | 2020106364 | A3 | 30 July 2020 |
| | | | | WO | 2020106364 | A8 | 18 March 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211699755